Europäisches Patentamt

European Patent Office

Office européen des brevets

(19)

(11) **EP 1 034 148 B1**

(12) **FASCICULE DE BREVET EUROPEEN**

(45) Date de publication et mention
de la délivrance du brevet:
**06.03.2002 Bulletin 2002/10**

(51) Int Cl.$^7$: **C04B 28/02**, C04B 14/48
// (C04B28/02, 14:06, 14:20,
14:48), C04B18:08

(21) Numéro de dépôt: **98956971.0**

(22) Date de dépôt: **27.11.1998**

(86) Numéro de dépôt international:
**PCT/FR98/02552**

(87) Numéro de publication internationale:
**WO 99/28267 (10.06.1999 Gazette 1999/23)**

(54) **BETON DE FIBRES METALLIQUES, MATRICE CIMENTAIRE ET PRE-MELANGES POUR LA PREPARATION DE LA MATRICE ET DU BETON**

MIT METALLFASERN BEWEHRTER BETON, ZEMENTMATRIX UND VORMISCHUNG ZUM HERSTELLEN DER MATRIX UND DEM BETON

METAL FIBRE CONCRETE, CEMENTITIOUS MATRIX AND PRE-MIXES FOR PREPARING MATRIX AND CONCRETE

(84) Etats contractants désignés:
**AT BE CH CY DE DK ES FI FR GB GR IE IT LI LU MC NL PT SE**
Etats d'extension désignés:
**LT LV RO SI**

(30) Priorité: **27.11.1997 FR 9714928**

(43) Date de publication de la demande:
**13.09.2000 Bulletin 2000/37**

(73) Titulaires:
• **BOUYGUES TRAVAUX PUBLICS**
**78280 Guyancourt (FR)**
• **LAFARGE**
**75116 Paris (FR)**
• **RHODIA CHIMIE**
**92400 Courbevoie Cédex (FR)**

(72) Inventeurs:
• **CHEYREZY, Marcel**
**F-92310 Sèvres (FR)**
• **DUGAT, Jérôme**
**F-78180 Montigny-le-Bretonneux (FR)**

• **CLAVAUD, Bernard**
**F-38460 Crémieu (FR)**
• **ORANGE, Gilles**
**F-95230 Soisy-sous-Montmorency (FR)**
• **FROUIN, Laurent**
**F-94240 L'Hay-les-Roses (FR)**

(74) Mandataire: **Schrimpf, Robert et al**
**Cabinet Regimbeau 20, rue de Chazelles**
**75847 Paris cedex 17 (FR)**

(56) Documents cités:
**EP-A- 0 440 523        WO-A-95/01316**
**WO-A-96/22953        FR-A- 2 640 962**

• **PATENT ABSTRACTS OF JAPAN vol. 018, no. 276 (C-1204), 26 mai 1994 & JP 06 048804 A (MITSUBISHI KASEI CORP), 22 février 1994 & CHEMICAL ABSTRACTS, vol. 121, no. 10, 5 septembre 1994 Columbus, Ohio, US; abstract no. 116215,**
• **PATENT ABSTRACTS OF JAPAN vol. 018, no. 061 (C-1160), 2 février 1994 & JP 05 279097 A (SUMITOMO METAL IND LTD), 26 octobre 1993**

EP 1 034 148 B1

**Description**

La présente invention appartient au domaine des bétons, plus particulièrement des bétons de fibres. Elle a pour objet principal un béton amélioré, permettant notamment de fabriquer des éléments de structures de génie civil destinés à la réalisation de bâtiments et d'ouvrages d'art et ayant des propriétés supérieures à celles des éléments de la technique antérieure. En particulier, la présente invention vise à obtenir, pour des bétons de structure, un comportement mécanique à la fois tenace et ductile.

Une analyse structurelle des bétons a montré que leurs propriétés mécaniques sont étroitement liées à la présence de défauts de structure. Plusieurs types de défauts se différenciant par leur taille peuvent être observés dans ces bétons lorsqu'ils sont soumis à des charges mécaniques.

A l'échelle la plus faible, on observe le défaut dit de microporosité du béton. Il s'agit de pores, dits capillaires, issus des espaces intergranulaires initialement présents dans la pâte fraîche. Leur taille varie entre 50 nm et quelques μm.

A l'échelle suivante, on observe les défauts de microfissuration. Il s'agit de microfissures présentant des ouvertures allant de 1 à quelques centaines de μm. Elles sont non coalescentes, c'est-à-dire qu'elles ne forment pas un chemin continu à travers la structure. Elles sont principalement dues au caractère hétérogène du béton, les granulats présentant des propriétés mécaniques et physiques différentes de celles du liant/ciment. Elles apparaissent lors de chargement mécanique. Ce type de défaut est un responsable majeur des faibles propriétés mécaniques du béton en traction et de son caractère fragile.

A la dernière échelle, on observe les défauts de macrofissuration. L'ouverture de ces fissures varie de quelques centaines de μm à quelques mm. Ces fissures sont coalescentes.

On peut également observer des défauts majeurs de taille millimétrique qui sont dus à une mauvaise préparation du béton (air occlus, défauts de remplissage).

Des solutions ont été suggérées soit pour diminuer la présence de ces différents défauts, soit pour atténuer leurs effets sur les caractéristiques mécaniques du béton.

Pour améliorer les caractéristiques mécaniques des bétons, on a proposé de remplacer le sable de la matrice cimentaire par d'autres constituants plus performants, mais le coût du béton s'en trouve augmenté de façon rédhibitoire pour que son utilisation puisse être envisagée de façon courante en génie civil, du fait des contraintes économiques qui pèsent dans ce domaine.

On a également proposé d'incorporer à la composition de béton des agrégats de dureté élevée, mais les quantités à mettre en oeuvre pour obtenir les performances souhaitées augmentent également de façon excessive le prix de revient du béton, compte-tenu du coût élevé de ces agrégats.

On a aussi proposé d'améliorer, parfois de façon spectaculaire, certaines propriétés mécaniques du béton en lui incorporant un taux élevé de fibres de renfort, soit typiquement un taux de 10 à 15% en volume, mais ce taux non seulement a un effet très sensible sur le prix de revient du béton, mais encore rend son malaxage, son homogénéisation et éventuellement son coulage, trop difficiles ou trop critiques pour être applicable en génie civil et notamment dans les conditions de travail d'un chantier de construction.

Egalement, la microporosité a pu être partiellement contrôlée en diminuant le rapport en poids eau sur ciment, et en utilisant des fluidifiants. L'utilisation des charges fines, notamment à réaction pouzzolanique, a permis aussi de réduire la taille des micropores.

Cependant, l'organisation du squelette granulaire par les méthodes habituelles ne permet pas d'obtenir des bétons avec une rhéologie satisfaisante dans les conditions acceptables de mise en oeuvre du génie civil (fibres mal dispersées, défauts de microstructures, ...).

La microfissuration a elle été fortement réduite par:

- l'amélioration de l'homogénéité du béton, en limitant par exemple la taille des granulats à 800 μm,
- l'amélioration de la compacité du matériau (optimisation granulaire et pressage éventuel avant et pendant la prise),
- des traitements thermiques après prise.

Quant à la macrofissuration, elle peut être contrôlée par l'utilisation de fibres métalliques, mais avec les difficultés de mise en oeuvre mentionnées précédemment

A titre de document illustratif de la technique antérieure, on peut citer la demande de brevet WO-A-95/01316 concernant un béton de fibres métalliques dans lequel la quantité de fibres est contrôlée et les dimensions des fibres sont choisies dans des proportions déterminées par rapport à celles des éléments granulaires.

Ce béton de fibres comprend du ciment, des éléments granulaires, des éléments fins à réaction pouzzolanique et des fibres métalliques. Les éléments granulaires doivent présenter une grosseur de grain maximale D d'au plus 800 μm, les fibres doivent avoir une longueur individuelle I comprise entre 4 et 20 mm, et le rapport R entre la longueur moyenne L des fibres et D doit au moins être égal à 10, la quantité de fibres étant telle que leur volume est de 1 à 4% du volume du béton après la prise.

Le béton obtenu présente un comportement ductile ou de pseudo-écrouissage.

Le besoin se fait encore sentir d'éliminer les défauts précités ou de réduire fortement leurs effets et notamment les microfissurations, car il a pu être observé que les mises en oeuvre décrites dans l'art antérieur servent principalement à éviter le développement des macrofissures et non des microfissures ; les microfissures ne sont alors qu'en partie stabilisées et se développent sous l'effort.

La présente invention a pour objet un béton contenant des fibres métalliques de renfort et possédant des propriétés améliorées par rapport aux bétons similaires de la technique antérieure.

Par propriétés améliorées, on entend aussi bien des caractéristiques mécaniques supérieures à celles des bétons de fibres connus que des caractéristiques au moins égales à celles des bétons de fibres connus, mais susceptibles d'être obtenues à l'échelle industrielle de manière constante et reproductible.

Un autre but de la présente invention est d'augmenter le niveau de contrainte où apparaît le premier endommagement du béton (c'est-à-dire les microfissurations) et ainsi d'accroître le domaine d'utilisation du béton, à savoir le comportement élastique linéaire du béton.

Encore un autre but de la présente invention est d'améliorer l'écrouissage du béton au delà du premier endommagement en contrôlant la propagation des macrofissures. L'invention se propose ainsi d'accroître le domaine d'utilisation du béton au-delà du premier endommagement en améliorant le comportement ductile du béton.

Un autre but également de l'invention est d'améliorer, par un effet de synergie entre la matrice cimentaire et les fibres, le comportement du béton à la fois vis-à-vis de l'apparition des microfissures et de la propagation de macrofissures.

Par "matrice cimentaire", on désigne la composition cimentaire durcie hors fibres métalliques.

Un autre but encore de la présente invention, particulièrement important pour l'obtention de corps en béton qui, en raison de leur dimension ou conditions de chantier ne pourraient être soumis à un traitement thermique est l'obtention dans des conditions améliorées vis-à-vis de la technique antérieure et notamment à des températures voisines de la température ambiante (20°C), d'un béton ayant des caractéristiques mécaniques (au sens indiqué précédemment) au moins égales à celles qui ne peuvent être obtenues qu'au prix d'un traitement thermique dans le cas des meilleurs bétons de fibres connus.

La présente invention a aussi pour objet la matrice cimentaire qui permet de réaliser le béton de l'invention et les prémélanges qui comprennent tout ou partie des constituants nécessaires à la préparation de cette matrice ou du béton.

Sous sa forme générale, l'invention concerne un béton constitué d'une matrice cimentaire durcie dans laquelle sont dispersées des fibres métalliques, provenant du mélange avec de l'eau d'une composition comprenant, outre les fibres:

(a) du ciment ;

(b) des éléments granulaires ayant une grosseur de grain maximale Dmax d'au plus 2 mm, de préférence d'au plus 1 mm ;

(c) des éléments à réaction pouzzolanique ayant une taille de particules élémentaires d'au plus 1 μm, de préférence d'au plus 0,5 μm ;

(d) des constituants capables d'améliorer la ténacité de la matrice choisis parmi des éléments aciculaires ou plaquettaires ayant une taille moyenne d'au plus 1 mm, et présents dans une proportion volumique comprise entre 2,5 et 35% du volume cumulé des éléments granulaires (b) et des éléments à réaction pouzzolanique (c);

(e) au moins un agent dispersant

et répondant aux conditions suivantes :

(1) le pourcentage en poids de l'eau E par rapport au poids cumulé du ciment (a) et des éléments (c) est compris dans la gamme 8-24 %;

(2) les fibres présentent une longueur individuelle I d'au moins 2 mm et un rapport l/φ, φ étant le diamètre des fibres, d'au moins 20 ;

(3) le rapport R entre la longueur moyenne L des fibres et la grosseur de grain maximale Dmax des éléments granulaires est d'au moins 10 ;

(4) la quantité de fibres est telle que leur volume est inférieur à 4% et de préférence à 3,5% du volume du béton après la prise.

Ainsi, grâce à une conception nouvelle du squelette granulaire et de sa relation avec les fibres de renforts, cette solution répond au problème posé avec ce compromis propriétés mécaniques/rhéologie.

On ne change pas sensiblement les propriétés du béton selon l'invention, si on utilise également au sein de la matrice des éléments granulaires (b) de grosseur de grain dépassant 2 mm mais dans une proportion qui ne dépasse pas 25 % du volume de l'ensemble des constituants (a) + (b) + (c) + (d).

La présence de cette classe granulaire dans une telle proportion peut être considérée comme une charge qui ne participe pas aux performances mécaniques du matériau dans la mesure où :

- la taille de grain D50 de l'ensemble des constituants (a), (b), (c) et (d) est d'au plus 200 µm, de préférence d'au plus 150 µm, et
- le rapport R entre la longueur moyenne L des fibres et la taille des grains D75 de l'ensemble des constituants (a), (b), (c) et (d) est d'au moins 5, de préférence d'au moins 10

Par taille des grains D75 et D50, on entend respectivement les tailles des tamis dont le passant constitue respectivement 75 % et 50 % du volume total des grains.

L'invention concerne donc également un béton constitué d'une matrice cimentaire durcie dans laquelle sont dispersées des fibres métalliques, provenant du mélange avec de l'eau d'une composition comprenant, outre les fibres :

(a) du ciment ;
(b) des éléments granulaires ;
(c) des éléments à réaction pouzzolanique ayant une taille de particules élémentaires d'au plus 1 µm, de préférence d'au plus 0,5 µm ;
(d) des constituants capables d'améliorer la ténacité de la matrice choisis parmi des éléments aciculaires ou plaquettaires ayant une taille moyenne d'au plus 1 mm, et présents dans une proportion volumique comprise entre 2,5 et 35% du volume cumulé des éléments granulaires (b) et des éléments à réaction pouzzolanique (c);
(e) au moins un agent dispersant ;

et répondant aux conditions suivantes:

(1) le pourcentage en poids de l'eau E par rapport au poids cumulé du ciment (a) et des éléments (c) est compris dans la gamme 8-24%;
(2) les fibres présentent une longueur individuelle I d'au moins 2 mm et un rapport I/ø, ø étant le diamètre des fibres, d'au moins 20 ;
(3) le rapport R entre la longueur moyenne L des fibres et la taille de grain D75 de l'ensemble des constituants (a), (b), (c) et (d) est d'au moins 5, de préférence d'au moins 10;
(4) la quantité de fibres est telle que leur volume est inférieur à 4% et de préférence à 3,5% du volume du béton après la prise ;
(5) l'ensemble des constituants (a), (b), (c) et (d) présente une taille de grain D75 d'au plus 2 mm, de préférence, d'au plus 1 mm, et une taille de grain D50 d'au plus 150 µm, de préférence d'au plus 100 µm.

Les conditions (3) et (5) s'appliquent à tous les constituants solides (a), (b), (c) et (d) confondus, hors fibres, et non pour chacun pris individuellement

De préférence, la ténacité de la matrice cimentaire est d'au moins 15 J/m2, avantageusement d'au moins 20 J/m2.

La ténacité est exprimée soit en termes de contrainte (facteur d'intensité de contrainte : Kc), soit en termes d'énergie (taux critique d'énergie : Gc), en utilisant le formalisme de la Mécanique Linéaire de la Rupture.

On décrira ci-après dans la partie de la description relative aux exemples les méthodes de mesure utilisées pour déterminer la ténacité de la matrice cimentaire.

La ténacité de la matrice cimentaire est obtenue par ajout à la composition cimentaire *d'éléments (d)* de taille moyenne d'au plus 1 mm, de préférence d'au plus 500 µm, se présentant sous une forme aciculaire ou sous forme de plaquettes. ils sont présents dans une proportion volumique comprise dans la gamme 2,5-35%, en particulier dans la gamme 5-25% du volume cumulé des éléments granulaires (b) et des éléments à réaction pouzzolanique (c).

Lesdits éléments, compte-tenu de leur fonction d'amélioration de la ténacité de la matrice, seront dénommés ci-après dans la description " éléments renforts ".

Par "taille" des éléments renforts, on entend la taille de leur dimension la plus grande (notamment la longueur pour les formes aciculaires).

Il peut s'agir de produits naturels ou de synthèse.

Les éléments renforts de forme aciculaire peuvent être choisis parmi les fibres de wollastonite, les fibres de bauxite, les fibres de mullite, les fibres de titanate de potassium, les fibres de carbure de silicium, les fibres de cellulose ou de dérivés de cellulose, tels que l'acétate de cellulose, les fibres de carbone, les fibres de carbonate de calcium, les fibres d'hydroxyapatite et autres phosphates de calcium, ou les produits dérivés obtenus par broyage desdites fibres et les mélanges desdites fibres.

De préférence, on utilise des éléments renforts dont l'acicularité, exprimée par le rapport longueur/diamètre, est au minimum de 3 et de préférence au minimum de 5.

Les fibres de wollastonite ont donné de bons résultats. Ainsi, la présence de fibres de wollastonite dans la matrice cimentaire conduit à une réduction de la microporosité. Cet effet surprenant est particulièrement apparent pour des bétons ayant subi un mûrissement à 20°C (voir ci-après).

Les éléments renforts sous forme de plaquettes peuvent être choisis parmi les plaquettes de mica, les plaquettes de talc, les plaquettes de silicates mixtes (argiles), les plaquettes de vermiculite, les plaquettes d'alumine et aluminates ou silicates mixtes et les mélanges desdites plaquettes.

Les plaquettes de mica ont donné de bons résultats.

Il est possible d'utiliser des combinaisons de ces différentes formes ou natures d'éléments renforts dans la composition du béton selon l'invention.

Ces éléments renforts peuvent au moins présenter en partie en surface un revêtement organique polymérique comprenant un latex ou obtenu à partir d'au moins un des composés suivants: alcool polyvinylique, silanes, siliconates, résines siloxanes, polyorganosiloxanes ou le produit de la réaction entre (I) au moins un acide carboxylique contenant 3 à 22 atomes de carbone, (2) au moins une amine aromatique ou aliphatique polyfonctionnnelle ou amine substituée, contenant de 2 à 25 atomes de carbone, et (3) un agent de réticulation qui est un complexe de métal hydrosoluble, contenant au moins un métal choisi parmi : le zinc, l'aluminium, le titane, le cuivre, le chrome, le fer, le zirconium et le plomb ; ce produit est plus particulièrement décrit dans la demande EP-A-0.372.804.

L'épaisseur de ce revêtement peut varier entre 0,01 et 10 $\mu$m, de préférence entre 0,1 et 1 $\mu$m.

Les latex peuvent être choisis parmi les latex de styrène-butadiène, les latex acryliques, les latex styrène-acryliques, les latex méthacryliques, les latex carbonylés et phosphonés. Les latex présentant des fonctions complexantes du calcium sont préférés.

Le revêtement organique polymérique peut être obtenu par traitement en lit fluidisé ou à l'aide d'un mélangeur type FORBERG des éléments renforts en présence d'un des composés définis ci-dessus.

Les composés suivants sont préférés : le polyorganosiloxane H240, les résines siloxanes Rhodorsil 878, 865 et 1830 PX, le Manalox 403/60/WS et WB LS 14 tous commercialisés par Rhodia Chimie , les siliconates de potassium.

Ce type de traitement est particulièrement recommandé pour les éléments renforts qui sont des produits naturels.

Pour ce qui est des *fibres métalliques,* il peut s'agir de fibres métalliques choisies parmi les fibres d'acier telles que les fibres d'acier à haute tenue mécanique, les fibres d'acier amorphe, ou encore les fibres d'acier inoxydable. Eventuellement, les fibres d'acier peuvent être revêtues d'un métal non ferreux tel que le cuivre, le zinc, le nickel (ou leurs alliages).

La longueur individuelle I des fibres métalliques est d'au moins 2 mm et est, de préférence, comprise dans la gamme 10-30 mm. Le rapport I/ø, étant le diamètre des fibres est d'au moins 20 et, de préférence, d'au plus 200.

On peut utiliser des fibres à géométrie variable : elles peuvent être crénelées, ondulées ou crochetées aux extrémités. On peut également jouer sur la rugosité des fibres et/ou utiliser des fibres à section transversale variable ; les fibres peuvent être obtenues par toute technique appropriée, y compris par tressage ou câblage de plusieurs fils métalliques formant une torsade.

La quantité de fibres est telle que leur volume est inférieur à 4%, et de préférence à 3,5% du volume du béton après la prise.

Avantageusement, la contrainte d'adhérence moyenne des fibres dans la matrice cimentaire durcie doit être d'au moins 10 MPa, de préférence d'au moins 15 MPa. Cette contrainte est déterminée par essai d'extraction d'une monofibre encastrée dans un bloc de béton, ainsi qu'il sera décrit ci-après.

Il a été observé que les bétons selon l'invention présentant à la fois une telle contrainte d'adhérence des fibres et une ténacité de matrice élevée (de préférence d'au moins 15 J/m$^2$) conduisent à de meilleures performances mécaniques, par synergie entre ces deux propriétés.

Le niveau d'adhérence fibre/matrice peut être contrôlé par plusieurs moyens que l'on peut utiliser individuellement ou simultanément

Selon un premier moyen, l'adhérence des fibres dans la matrice cimentaire peut être obtenue par traitement de surface des fibres. Ce traitement des fibres peut être effectué par au moins l'un des procédés suivants:

- attaque chimique des fibres ;
- dépôt d'un composé minéral sur les fibres, notamment par dépôt de silice ou d'un phosphate métallique.

L'attaque chimique peut être réalisée, par exemple, par mise en contact des fibres avec un acide, puis neutralisation.

Le dépôt de silice peut être obtenu par mise en contact des fibres avec des composés du silicium, tels que des silanes, des siliconates ou des sols de silice.

Le dépôt de phosphate métallique est généralement obtenu par un procédé de phosphatation, lequel consiste à introduire les fibres métalliques préalablement décapées dans une solution aqueuse comprenant un phosphate métallique, de préférence du phosphate de manganèse ou de zinc, puis à filtrer la solution pour récupérer les fibres. Les fibres sont ensuite rincées, neutralisées, puis rincées à nouveau. Contrairement au procédé habituel de phosphatation, les fibres obtenues ne doivent pas subir de finition de type grasse ; on peut par contre les imprégner éventuellement d'un additif soit pour apporter une protection anticorrosion, soit pour faciliter leur mise en oeuvre avec le milieu cimentaire. Le traitement de phosphatation peut également être obtenu en enduisant ou pulvérisant la solution de phosphate métallique sur les fibres.

Tout type de procédé de phosphatation peut être utilisé, on peut se reporter à ce sujet aux traitements décrits dans l'article de G. LORIN, intitulé " La Phosphatation des Métaux" (1973), Ed. EYROLLES.

Selon un deuxième moyen, la contrainte d'adhérence des fibres dans la matrice cimentaire peut être obtenue par introduction dans la composition d'au moins un des composés suivants : les composés de la silice comprenant majoritairement de la silice, du carbonate de calcium précipité, de l'alcool polyvinylique en solution aqueuse, un latex ou un mélange desdits composés.

Par composé de la silice comprenant majoritairement de la silice, on entend ici les produits de synthèse choisis parmi les silices de précipitation, les sols de silice, les silices de pyrogénation (type Aérosil), les silico-aluminates, par exemple le Tixosil 28 commercialisé par Rhodia Chimie, ou les produits type argile (naturels ou dérivés) : par exemple les smectites, les silicates de magnésium, les sépiolites, les montmorillonites.

On utilise de manière préférée au moins une silice de précipitation.

Par silice de précipitation, on entend ici une silice obtenue par précipitation à partir de la réaction d'un silicate de métal alcalin avec un acide, en général inorganique, à un pH adéquat du milieu de précipitation, en particulier un pH basique, neutre ou peu acide ; le mode de préparation de la silice peut être quelconque (addition d'acide sur un pied de cuve de silicate, addition simultanée totale ou partielle d'acide ou de silicate sur un pied de cuve d'eau ou de solution de silicate, etc...) et est choisi en fonction du type de silice que l'on souhaite obtenir ; à l'issue de l'étape de précipitation, on procède en général à une étape de séparation de la silice du milieu réactionnel selon tout moyen connu, filtre presse ou filtre sous vide par exemple ; on recueille ainsi un gâteau de filtration, lequel est lavé si nécessaire ; ce gâteau peut, éventuellement après délitage, être séché par tout moyen connu, notamment par atomisation, puis éventuellement broyé et/ou aggloméré

En général, la quantité de silice de précipitation introduite est comprise entre 0,1% et 5% en poids, exprimé en sec, par rapport au poids total du béton. Au delà de 5%, on observe habituellement des problèmes de rhéologie lors de la préparation du mortier.

De préférence, la silice de précipitation est introduite dans la composition sous forme d'une suspension aqueuse. Il peut notamment s'agir d'une suspension aqueuse de silice présentant :

- une teneur en matière sèche de 10 à 40% en poids ;
- une viscosité inférieure à $4.10^{-2}$ Pa.s pour un cisaillement de 50 $s^{-1}$.
- une quantité de silice contenue dans le surnageant de ladite suspension, à 7500 trs/min pendant 30 min, de plus de 50% du poids de la silice contenue dans la suspension.

Cette suspension est plus particulièrement décrite dans la demande de brevet WO-A-96/01787. La suspension de silice Rhoximat CS 60 SL commercialisée par Rhodia Chimie convient particulièrement pour ce type de béton.

Le *ciment (a)* de la composition selon l'invention est avantageusement un ciment Portland tel que les ciments Portland CPA PMES, HP, HPR, CEM I PMES, 52,5 ou 52,5R ou HTS (haute teneur en silice).

Les *éléments granulaires (b)* sont essentiellement des sables ou des mélanges de sables, tamisés ou broyés, pouvant avantageusement comprendre des sables siliceux, en particulier de la farine de quartz.

La taille de grain maximale D100 ou Dmax de ces éléments est de préférence d'au plus 6 mm.

Ces éléments granulaires sont en général présents à raison de 20 à 60% en poids de la matrice cimentaire, de préférence de 25 à 50% en poids de ladite matrice.

Les *éléments fins à réaction pouzzolanique (c)* présentent une taille de particules élémentaires d'au moins 0,1 μm, d'au plus 1 μm, de préférence d'au plus 0,5 μm. Ils peuvent être choisis parmi les composés de silice, notamment les fumées de silice, les cendres volantes, les laitiers de hauts-fourneaux, les dérivés d'argiles tels que le kaolin. La silice peut être une fumée de silice provenant de l'industrie du zirconium plutôt qu'une fumée de silice provenant de l'industrie du silicium.

Le rapport en poids *eau*/ciment, traditionnel dans la technique du béton, peut varier lorsqu'on utilise des substituts du ciment, qui sont notamment les éléments à réaction pouzzolanique. Pour les besoins de la présente invention, on a donc défini le rapport pondéral de la quantité d'eau E vis-à-vis du poids cumulé du ciment et des éléments à réaction pouzzolanique. Ainsi défini, ce rapport est compris entre 8 et 24% environ, de préférence entre 13 et 20% environ. Dans la description des exemples, on a néanmoins utilisé le rapport E/C de l'eau au ciment.

La composition selon l'invention comprend également au moins un *agent dispersant (e).* Cet agent dispersant est en général un agent fluidifiant L'agent fluidifiant peut être choisi parmi : les lignosulfonates, la caséine, les polynaphtalènes, en particulier les polynaphtalènesulfonates de métaux alcalins, les dérivés du formaldéhyde, les polyacrylates de métaux alcalins, les polycarboxylates de métaux alcalins et les polyoxydes d'éthylène greffés. En général, la composition selon l'invention comprend de 0,5 à 2,5 parties en poids d'agent fluidifiant pour 100 parties en poids de ciment.

D'autres additifs peuvent être ajoutés dans la composition selon l'invention, par exemple un agent anti-mousse. A titre d'exemple, on peut par exemple utiliser les antimousses à base de polydiméthyl-siloxanes ou de propylène glycol.

Parmi ce type d'agents, on peut citer notamment les silicones sous la forme d'une solution, d'un solide, et de préférence sous la forme d'une résine, d'une huile ou d'une émulsion, de préférence, dans l'eau. Conviennent tout particulièrement les silicones comprenant essentiellement des motifs M (RsiO 0,5) et D ($R^2SiO$). Dans ces formules, les radicaux R, identiques ou différents, sont plus particulièrement choisis parmi l'hydrogène et les radicaux alkyles comprenant 1 à 8 atomes de carbone, le radical méthyle étant préféré. Le nombre de motifs est de préférence compris dans la gamme 30 à 120.

La quantité d'un tel agent dans la composition est généralement d'au plus 5 parties en poids pour 100 parties de ciment.

Toutes les tailles de particules sont mesurées par MET (microscopie électronique en transmission) ou MEB (microscopie électronique par balayage).

La matrice peut contenir encore d'autres ingrédients à condition que ceux-ci ne perturbent pas les performances attendues du béton.

Le béton peut être obtenu selon tout procédé connu de l'homme du métier, notamment par gâchage des constituants solides et de l'eau, mise en forme (moulage, coulage, injection, pompage, extrusion, calandrage) puis durcissement

Par exemple, pour préparer le béton, on malaxe les constituants de la matrice et les fibres de renfort avec la quantité d'eau adéquate.

Avantageusement, on respecte l'ordre de malaxage suivant :

- malaxage des constituants pulvérulents de la matrice (par exemple 2 minutes) ;
- introduction de l'eau et d'une fraction, par exemple la moitié des adjuvants ;
- malaxage (par exemple 1 minute) ;
- introduction de la fraction restante des adjuvants ;
- malaxage (par exemple 3 minutes) ;
- introduction des fibres de renforts et des constituants additionnels ;
- malaxage (par exemple 2 minutes).

Le béton est soumis à une maturation entre 20°C et 100°C pendant la durée nécessaire à l'obtention des caractéristiques mécaniques désirées.

On a trouvé de façon surprenante qu'une maturation à une température proche de l'ambiante fournissait de bons résultats, et ce, grâce à la sélection des constituants de la composition du béton.

Dans ce cas, on laisse mûrir le béton, par exemple à une température voisine de 20°C.

La maturation peut également faire intervenir un traitement thermique entre 60 et 100°C à pression normale sur le béton durci.

Le béton obtenu peut être notamment soumis à un traitement thermique entre 60 et 100°C pendant 6 heures à 4 jours avec une durée optimale de l'ordre de 2 jours, le traitement commençant après la fin de la prise du mélange ou au moins un jour après le début de la prise. En général, des durées de traitement de 6 heures à 72 heures suffsent, dans la gamme de températures précitée

Le traitement thermique est réalisé en ambiance sèche ou humide ou suivant des cycles faisant alterner les deux ambiances, par exemple 24 heures en ambiance humide suivies de 24 heures en ambiance sèche.

On met en oeuvre ce traitement thermique sur des bétons ayant terminé leur prise, de préférence âgés d'au moins un jour, et encore mieux âgés d'au moins 7 jours environ.

L'addition de poudre de quartz peut être utile lorsque le béton est soumis au traitement thermique précité.

Le béton peut être précontraint en prétension par fil adhérent ou par toron adhérent, ou précontraint en post-tension par monotorons gainés graissés ou par câble ou barre sous gaine, le câble étant constitué d'un assemblage de fils ou étant constitué de torons.

La précontrainte, qu'elle soit sous forme de pré-tension, ou sous forme de post-tension, est particulièrement bien adaptée à des produits en béton selon l'invention.

En effet, les câbles de pré-contrainte métalliques ont toujours des résistances à la traction très élevées, mal utilisées, parce que la fragilité de la matrice qui les contient ne permet pas d'optimiser les dimensions des éléments structurels en béton.

Un progrès a déjà été fait avec l'usage de bétons de haute performance ; dans le cas du béton selon l'invention le matériau est renforcé par des fibres métalliques de manière homogène lui permettant d'atteindre des performances mécaniques élevées conjointement à une ductilité. La précontrainte de ce matériau au moyen de câbles ou torons, quel qu'en soit le mode, est alors utilisée dans sa quasi totalité, ce qui crée des éléments en béton précontraint très résistants en traction et en flexion et donc optimisés.

La diminution de volume obtenue, du fait de cet accroissement de résistances mécaniques, peut générer des éléments préfabriqués très légers. De ce fait, on a alors la possibilité d'avoir des éléments en béton de grande portée facilement transportables grâce à leur légèreté ; ceci est particulièrement bien adapté à la réalisation de grands ouvrages d'art où l'utilisation de la précontrainte par post-tension est largement utilisée. La solution présente alors pour ce type d'ouvrage des gains de montage et des temps de durée de chantier particulièrement favorables.

De plus, en cas de cure thermique, l'utilisation de la précontrainte, pré- ou post-tension, diminue significativement le retrait.

Cette propriété est particulièrement recherchée et l'ensemble des avantages ci-dessus associés à la très faible perméabilité du produit, très avantageux pour la durabitité et l'entretien des ouvrages d'art dans le temps, font que ce matériau peut valablement se substituer à des ouvrages réalisés en acier.

Les bétons obtenus selon la présente invention présentent en général une résistance en traction directe Rt d'au moins 12 MPa.

Ils peuvent également présenter une résistance en flexion 4 points Rf d'au moins 25 MPa, une résistance à la compression Rc d'au moins 150 MPa et une énergie de fracturation Wf d'au moins 2500 J/m$^2$.

L'invention concerne également la matrice cimentaire destinée à l'obtention et à la mise en oeuvre du béton défini ci-dessus.

Enfin, l'invention concerne les prémélanges comprenant tout ou partie des constituants nécessaires à la préparation du béton et de la matrice définis ci-dessus.

BREVE DESCRIPTION DES DESSINS

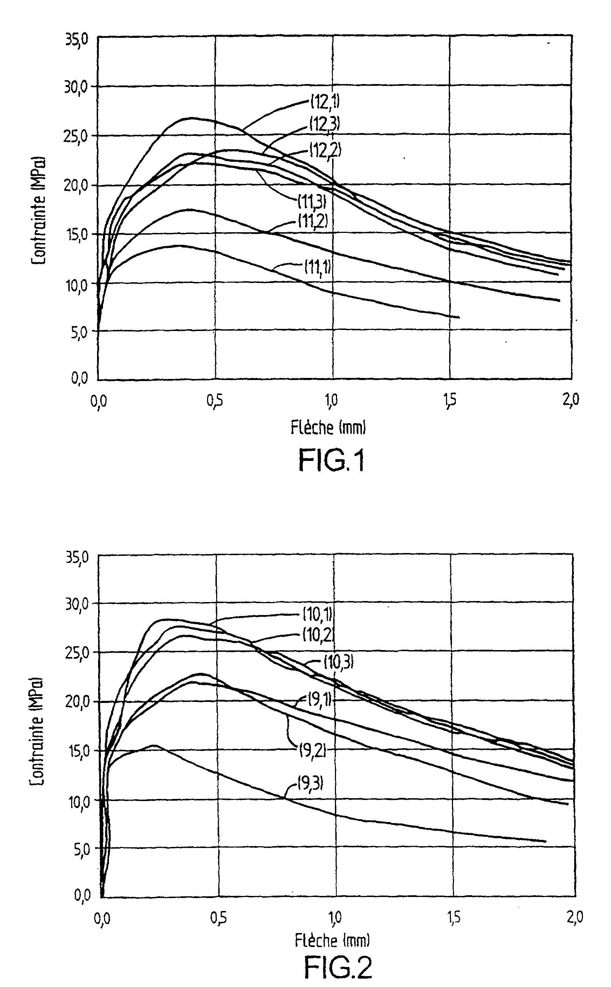

La *figure 1* est un graphique obtenu par des essais de flexion avec en ordonnées les valeurs de la contrainte (MPa) et en abscisses les valeurs de la flèche (mm) pour des échantillons de béton, avec un rapport E/C = 0,24 et un mûrissement à 20°C, respectivement avec wollastonite (courbes 12.1, 12.2 et 12.3) et sans wollastonite (courbes 11.1, 11.2, 11.3).

La *figure 2* est un graphique analogue à la figure 1 mais pour des échantillons de béton de même composition avec un traitement thermique à 90°C : courbes 10.1, 10.2, 10.3 avec wollastonite et courbes 9.1, 9.2, 9.3 sans wollastonite.

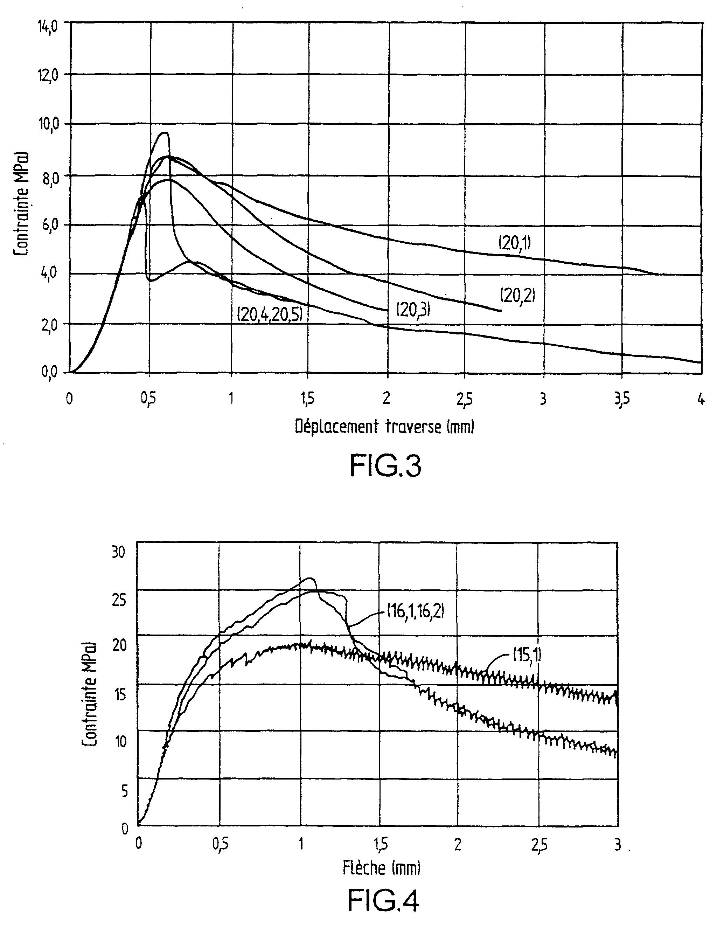

La *figure 3* est un graphique obtenu par des essais de traction avec des échantillons de béton concernant des fibres d'acier non traitées, avec un rapport E/C = 0,20 et un traitement thermique à 90°C, respectivement avec de la silice de précipitation (courbes 20.1, 20.2, 20.3) et sans silice de précipitation (courbes 20.4, 20.5).

La *figure 4* est un graphique obtenu par des essais de flexion pour trois échantillons avec un rapport E/C = 0,25 et un traitement thermique à 90°C respectivement avec des fibres traitées en surface (courbes 16.1, 16.2) et non traitées (courbe 15.1). En ordonnées sont portées les valeurs de la contrainte en flexion (MPa) et en abscisses les valeurs de fa flèche (mm).

Les *figures 5 à 7* représentent la porosité d'échantillons en béton, déterminée par la technique d'intrusion de mercure : en ordonnées, le volume cumulé (ml/g) et en abscisses le diamètre des pores (micromètre).

La *figure* 5 correspond à un échantillon en béton (exemple 1) qui a subi un mûrissement à 20°C.

La *figure 6* correspond à un échantillon en béton (exemple 2) qui a subi un traitement thermique à 90°C.

La *figure 7* correspond à un échantillon en béton contenant de la wollastonite (exemple 3) qui a subi un mûrissement à 20°C.

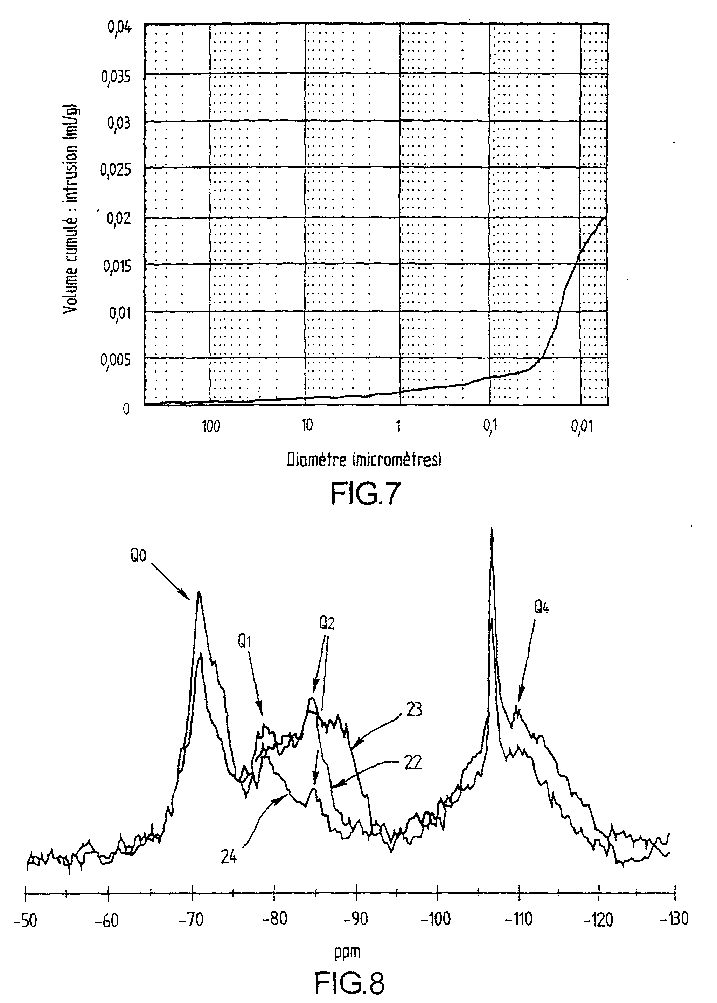

La *figure 8* est un graphique résultant d'une analyse par technique de résonance magnétique nucléaire du $^{29}$Si d'un béton selon l'invention comportant de la wollastonite et mûri à 20°C, (courbe 23) comparé à deux mêmes bétons ayant la même composition mais dépourvus de wollastonite dont l'un a fait l'objet d'un traitement thermique à 90°C (courbe 22) et l'autre a été mûri à 20°C (courbe 24). On voit que les deux courbes 22 et 23 sont peu différentes en ce qui concerne les pics Q2. Ces pics relatifs aux doubles liaisons de radicaux SiO$^4$ sont d'autant plus intenses que les chaînes d'hydrates sont longues. On peut donc conclure que l'ajout de wollastonite permet d'obtenir à 20°C un allongement de chaîne d'hydrates du même ordre que celui obtenu par traitement thermique à 90°C d'une composition sans wollastonite.

La *figure 9* est un graphique obtenu par des essais d'adhérence de fils d'acier traités ou non. En ordonnées on a porté les valeurs de la force d'arrachement (kN) et en abscisses les valeurs du déplacement de la fibre (mm).

La *figure 10* est un graphique obtenu par des essais d'adhérence de fils d'acier de différents diamètres. En ordonnées on a porté les valeurs de la force d'arrachement (kN) et en abscisses les valeurs du déplacement de la fibre (mm).

La *figure 11* est un graphique obtenu par des essais d'adhérence de fils d'acier ancrés dans le béton sur différentes longueurs. En ordonnées on a porté les valeurs de la contrainte de décohésion (MPa) et en abscisses les valeurs de la longueur d'ancrage (mm).

La *figure 12* est un graphique obtenu par des essais de flexion d'un béton selon l'invention en présence ou non d'un agent démoussant. En ordonnées on a porté les valeurs de la contrainte (MPa) et en abscisses les valeurs de la flèche (mm) pour des échantillons de béton avec un rapport E/C = 0,24.

La *figure 13* représente les courbes granulométriques de la somme des constituants (a) + (b) + (c) + (d) pour différents bétons selon l'invention.

Les *figures 14* et *15* donnent les propriétés de bétons présentant différentes répartitions granulométriques.

La *figure 16* est un graphique mettant en valeur l'effet de synergie entre la présence de fibres adhérentes et une matrice à haute ténacité.

On observera encore qu'une caractéristique importante de la présente invention est de permettre l'obtention de bétons ayant des propriétés améliorées et contenant pourtant une quantité de fibres métalliques nettement plus faible que dans de nombreuses propositions de la technique antérieure. Selon l'invention, en effet, des quantités de fibres métalliques inférieures à 4 % et de préférence à 3,5 % du volume du béton après la prise, et pouvant être notamment aussi faibles que 2 % du volume du béton après la prise, comme illustré dans les exemples précédents, sont suffisantes pour obtenir des bétons ayant des propriétés mécaniques améliorées. Cet effet surprenant est dû, pour autant qu'on le sache, au choix des constituants de la composition du béton et de leurs proportions au sein de celle-ci.

Les exemples qui suivent illustrent l'invention sans aucunement la limiter.

EXEMPLES

*Constituants*

Pour que les comparaisons effectuées aient leur pleine signification, les mêmes constituants ont été mis en oeuvre dans les exemples et sont indiqués ci-après.

Ciment Portland (a) : à haute teneur en silice, type HTS, provenant de la société LAFARGE (FRANCE).

Sable (b): sable de quartz BE31 de la Société SIFRACO (FRANCE).

Farine de Quartz (b) : qualité C400 avec 50 % de grains inférieurs à 10 microns provenant de la Société SIFRACO (FRANCE) ou qualité C500 avec 50 % de grains inférieurs à 5 microns provenant de la Société SIFRACO.

Silice vitreuse (c) : microsilice thermique issue de la fabrication du zirconium, type "MST", avec une surface "BET" de 18 $m^2$/g provenant de la Société S.E.P.R. (FRANCE),

Elément renfort de type aciculaire (d) : Wollastonite ($CaSiO^3$).

Le produit utilisé est mis sur le marché par la Société NYCO : NYCO MINERALS Inc., Willsboro, N.Y. - USA, sous la dénomination NYAD G., dont les caractéristiques sont :

- taille : I = 300 microns en moyenne (50 microns -500 microns)
  d = 20 microns
- facteur de forme : l/d = 15
- granulométrie :

  < 100 US Mesh (%) : 99
  < 200 US Mesh (%) : 87
  < 325 US Mesh (%) : 65

- densité spécifique : 2,9

Elément renfort de type wollastonite "broyée " (d) :

Le produit utilisé est la wollastonite NYCO 1250.

La wollastonite NYCO 1250 présente une taille moyenne (D50) à 8 microns, avec un facteur de forme (l/d) de 3 et une grosseur de particules de :

> < 20 microns (%) : 100
> < 10 microns (%) : 96

Elément renfort plaquettaire (d): mica (Muscovite : silicate hydraté d'Al et K)

Le produit utilisé est mis sur la marché par la Société KAOLINS D'ARVOR, 56270 Ploemeur, France, sous la dénomination Micarvor MG 160, dont les caractéristiques sont :

- taille :        I= 75 microns en moyenne (10 microns - 200 microns)
- épaisseur des plaquettes : quelques microns
- granulométrie :

> < 0,160 mm (%) : 98
> < 0,040 mm (%) : 30

- densité spécifique:        2,75

Adjuvants :

- *agent dispersant* liquide X 404 provenant de la Société MAPEI (ITALIE) ou SSP104 fabriqué par la Société TAKEMOTO OIL (JAPON) et distribué par la Société MITSUBISHI ou OPTIMA 100 fabriqué et distribué par CHRYSO ;
- *agent dispersant* poudre RHOXIMAT B 36 commercialisé par RHODIA CHIMIE ;
- *anti-mousse* RHOXIMAT 6352DD commercialisé par RHODIA CHIMIE ;
- *slurry de silice* RHOXIMAT CS60SL commercialisé par RHODIA CHIMIE.

Fibres : Les fibres métalliques sont des fibres d'acier ayant une longueur de 13 mm, un diamètre de 200 microns et une résistance de rupture en traction de 2800 MPa, fournies par la Société BEKAERT (Belgique). Lorsqu'elles sont présentes, les fibres sont introduites à raison de 2% en volume soit un poids par rapport au ciment de: 0,222.

**Préparation des éprouvettes en béton**

Dans les exemples, le mode opératoire pour la fabrication d'éprouvettes d'essai a consisté à utiliser un malaxeur à haute turbulence avec rotation de la cuve, type EIRICH R02 ayant une capacité de 5 litres, ou EIRICH R08 ayant une capacité de 75 litres ou un malaxeur à faible cisaillement de type HOBART ou PERRIER

En moyenne, dans tous les exemples, la valeur de l'air entraîné est inférieure à 3,5 %.

**Mûrissement**

Pour les tests, deux modes de traitement du béton durci ont été utilisés, l'un avec mûrissement à 20°C et l'autre avec traitement thermique à 90°C.

Mûrissement à 20°C: Les éprouvettes sont démoulées 48 heures après le coulage. Elles subissent ensuite un traitement consistant à les stocker sous eau à 20°C pendant un minimum de 14 jours. Les éprouvettes sont usinées (si besoin est, selon le test à réaliser) 26 jours après le coulage et le test est réalisé 28 jours après le coulage.

Traitement thermique à 90°C: Les éprouvettes sont démoulées 48 heures après le coulage. Elles subissent ensuite un traitement thermique consistant à les stocker en étuve à 90°C 24 heures en air humide puis 24 heures en air sec. L'usinage éventuel s'effectue 6 jours après le coulage et le test est réalisé au bout de 7 jours au minimum après le coulage.

*Mesures*

Les mesures portent sur les caractéristiques mécaniques de la matrice, principalement la ténacité, et sur les caractéristiques mécaniques du matériau final avec fibres métalliques, en flexion, traction et compression.

Elles sont effectuées sur des dimensions d'éprouvettes adaptées à la mesure correspondante.

Ténacité

Les méthodes de mesure de la ténacité de la matrice cimentaire sont les suivantes.

Les essais sont réalisés en flexion 3 points, à partir de prismes entaillés 40x40x250 ou 70x70x280 mm, c'est-à-dire des échantillons de géométrie SENB (procédure ASTM -E 399-83). Une entaille à profil en V est réalisée à sec sur ces prismes, à l'aide d'une fraiseuse équipée d'un disque diamanté (disque de précision à jante continue). La profondeur relative a/w de l'entaille est de 0,4 (a: profondeur de l'entaille, w: hauteur de l'échantillon).

Le facteur critique d'intensité de contrainte Kc est obtenu à partir de la charge de rupture F et de la longueur de la fissure au point d'instabilité (essai en asservissement déplacement, à $10^{-2}$ mm/s, sur machine d'essai universelle SCHENCK):

$$Kc = \frac{3}{2}\ \frac{Fl}{dw^2}\sqrt{a}\,Y$$

où:

l représente l'entre-axe entre points d'appui (banc de flexion) = 200 mm,
d et w sont respectivement la profondeur et la hauteur de l'échantillon,
a est la longueur de l'entaille au moment de la rupture,
Y est un paramètre de forme qui dépend de la longueur de fissure ($\alpha$ = a/w).

En flexion 3 points, on utilise de préférence le paramètre Y suivant (SRAWLEY, J.E.-International Journal of Fracture (1976), Vol. 12, pages 475 à 476):

$$Y = \frac{1{,}99\text{-}\alpha(1\text{-}\alpha)(2{,}15\text{-}3{,}93\alpha+2{,}7\alpha^2)}{(1+2\alpha)(1\text{-}\alpha)^{3/2}}$$

Dans le cas d'un comportement non linéaire (ductilité), la force retenue F pour l'estimation de la ténacité correspond à la fin de la partie linéaire du diagramme force-déplacement ; le point d'instabilité correspond alors à l'amorçage de la fissure.

Le taux critique d'énergie Gc peut être obtenu à partir des courbes force-déplacement, à condition d'extraire les contributions dues aux déformations parasites et de rapporter l'énergie dissipée à la section de ligament : (w-a) x d.

En déformation plane, il existe une relation simple entre Kc et Gc :

$$G_e = \frac{K_c^2\,(1\text{-}v^2)}{E}$$

où:

E est le module élastique,
$v$ représente le coefficient de Poisson.
E est obtenu expérimentalement par vibration d'un échantillon prismatique posé sur deux appuis, à partir de la détermination de la fréquence fondamentale (Méthode GRINDOSONIC).

Adhérence

En ce qui concerne l'adhérence des fibres métalliques dans la matrice cimentaire, la contrainte est déterminée par un essai d'extraction d'une monofibre encastrée dans un bloc de béton.

Les tests ont été réalisés sur du fil continu d'acier de diamètre : d = 200 $\mu$m.

Lorsque les fils sont traités, ils sont soigneusement dégraissés(alcool/acétone) puis décapés(acide chlorhydrique dilué). Un traitement de type phosphatation est alors réalisé (phosphatation manganèse ou zinc). Un soin particulier est apporté à la finition: neutralisation, rinçage, et séchage.

Les fils sont encastrés dans des blocs de béton de dimension 4X4X4cm. La composition utilisée est la même que celle utilisée pour les éprouvettes d'essai mécanique (flexion, compression, et traction) : le ratio eau/ciment est fixé à 0,25.

Les fils encastrés sur une longueur de 10 mm sont extraits par traction à l'aide d'une machine d'essai universelle (SCHENCK), à une vitesse de 0,1 mm/min.

L'effort exercé est mesuré via un capteur de force adapté, et le déplacement du fil (par rapport à l'échantillon) via un capteur d'extensométrie.

La contrainte d'adhérence moyenne est estimée à partir de la formule simplifiée suivante :

$$\tau_d = \frac{Fmax}{\pi\phi l_e}$$

où F max est la force maximale mesurée, ø le diamètre du fil et $l_e$ la longueur d'encastrement.

Tenue en traction directe : Rt

Il s'agit de la valeur obtenue en traction directe sur éprouvettes haltères usinées à partir de prismes 70X70X280 mm, soit une section utile de 70X50 mm sur une hauteur de 50 mm. Les éprouvettes, soigneusement alignées, sont montées de façon rigide sur le bâti d'essai (UTS) avec un seul degré de liberté.

$$R_t = \frac{Fmax}{70x50}$$

où Fmax représente la force maximale en N (pic) pour une rupture ayant fieu dans la section centrale 70X50 mm.

La fixation de l'éprouvette sur les mors de la machine de traction est réalisée par collage puis serrage par boulons.

Tenue en flexion : Rf

Rf est la valeur obtenue en flexion 4 points sur éprouvettes prismatiques 70X70X280 mm montées sur appuis rotulés suivant les normes NFP 18-411 et NFP 18-409 et ASTM C 1018.

$$Rf = \frac{3}{2} \frac{Fmax\ (l-l')}{dw^2}$$

où Fmax représente la force maximale en N (force au pic), l = 210 mm et l'=l/3 et d = w = 70 mm.

Tenue en compression : Rc

Rc est la valeur obtenue en compression directe sur échantillon cylindrique rectifié (diamètre 70 mm/hauteur 140 mm).

$$Rc = \frac{4F}{\pi d^2}$$

où F représente la force à la rupture en N, et d le diamètre des échantillons (70mm).

Energie de fracturation : Wf

Wf est la valeur obtenue par détermination de l'aire totale sous la courbe force-flèche, lors d'un essai de flexion 4 points sur prismes 70X70X280 mm. La flèche mesurée est corrigée afin de déterminer le déplacement réel de l'échantillon.

$$Wf = \frac{\int F\delta c}{dw}$$

où F est la force appliquée, δ c le déplacement vrai (flèche corrigée), dw la section de l'échantillon.

### *EXEMPLES 1 à 17 : influence des éléments renforts (d)*

A des fins de comparaison, on a présenté les résultats obtenus avec des bétons dans lesquels on a fait varier les constituants de la composition et, pour certains d'entre eux, dans lesquels certains constituants ont été omis, notamment les fibres, afin de faire ressortir les avantages surprenants réalisés en utilisant la combinaison des constituants d'une composition de béton selon l'invention.

Les résultats des exemples 1 à 17 ont été rassemblés dans le tableau I ci-après qui fournit la composition des échantillons de bétons réalisés et leurs paramètres respectifs.

Les quantités des éléments renforts (d) sont indiquées en pourcentages en volume par rapport au volume cumulé des éléments granulaires (b) et des éléments à réaction pouzzolanique (c).

Les quantités des autres constituants du béton (a, b, c, adjuvant, eau) sont exprimées en parties en poids.

L'adjuvant utilisé dans ces exemples 1 à 17 est un dispersant.

Le sable utilisé est le sable BE31 dont la répartition granulométrique est indiquée dans l'exemple 24.

Tableau I

| Exemple n° | 1 | 2 | 3 | 4 | 5 | 6 | 7 | 8 | 9 | 10 |
|---|---|---|---|---|---|---|---|---|---|---|
| Ciment Portland  (a) | 1 | 1 | 1 | 1 | 1 | 1 | 1 | 1 | 1 | 1 |
| Silice vitreuse  (c) | 0,325 | 0,325 | 0,325 | 0,325 | 0,325 | 0,325 | 0,325 | 0,325 | 0,325 | 0,325 |
| Farine de quartz  (b) | 0,300 | 0,300 | 0,300 | 0,300 | 0,300 | 0,300 | 0,300 | 0,300 | 0,300 | 0,300 |
| Wollastonite aciculaire  (d) | 0 | 0 | 0,39 | 0,39 | 0 | 0,240 | 0 | 0 | 0 | 0,240 |
| Mica  (d) | 0 | 0 | 0 | 0 | 0 | 0 | 0,220 | 0 | 0 | 0 |
| Wollastonite broyée  (d) | 0 | 0 | 0 | 0 | 0 | 0 | 0 | 0,150 | 0 | 0 |
| Sable  (b) | 1,430 | 1,430 | 1,070 | 1,070 | 1,430 | 1,215 | 1,215 | 1,29 | 1,430 | 1,215 |
| Dispersant   (extrait sec) | 0,01 | 0,01 | 0,02 | 0,02 | 0,02 | 0,02 | 0,02 | 0,02 | 0,01 | 0,02 |
| Eau | 0,200 | 0,200 | 0,270 | 0,270 | 0,250 | 0,250 | 0,300 | 0,250 | 0,240 | 0,240 |
| Fibres non traitées  (% volume) | 0 | 0 | 0 | 0 | 0 | 0 | 0 | 0 | 2 | 2 |
| Fibres traitées (% volume) | | | | | | | | | | |
| Mûrissement ou traitement thermique (°C) | 20 | 90 | 20 | 90 | 90 | 90 | 90 | 90 | 90 | 90 |
| Ténacité G (J/m$^2$) | 9 | 10 | 20 | 22 | 13 | 25 | 22 | 15 | 10 | 27 |
| Résistance à la flexion (MPa) | 16,6 | 16,5 | 11,1 | 14,3 | | | | | 21,3 | 28,7 |
| Résistance à la traction (MPa) | 7,1 | 6,7 | 6,0 | 6,7 | | | | | 10,8 | 13,0 |
| Résistance à la compression (MPa) | | 198,2 | | 201,8 | | | | | 182,3 | 180,3 |

EP 1 034 148 B1

Tableau I (SUITE)

| Exemple n° | 11 | 12 | 13 | 14 | 15 | 16 | 17 |
|---|---|---|---|---|---|---|---|
| Ciment Portland (a) | 1 | 1 | 1 | 1 | 1 | 1 | 1 |
| Silice vitreuse (c) | 0,325 | 0,325 | 0,325 | 0,325 | 0,325 | 0,325 | 0,325 |
| Farine de quartz (b) | 0,300 | 0,300 | 0,300 | 0,300 | 0,300 | 0,300 | 0,300 |
| Wollastonite aciculaire (d) | 0 | 0,240 | 0 | 0 | 0 | 0 | 0,240 |
| Mica (d) | 0 | 0 | 0 | 0,220 | 0 | 0 | 0 |
| Wollastonite broyée (d) | 0 | 0 | 0 | 0 | 0 | 0 | 0 |
| Sable (b) | 1,430 | 1,215 | 1,43 | 1,215 | 1,430 | 1,430 | 1,245 |
| Dispersant (extrait sec) | 0,012 | 0,015 | 0,015 | 0,015 | 0,015 | 0,015 | 0,015 |
| Eau | 0,240 | 0,240 | 0,300 | 0,300 | 0,250 | 0,250 | 0,250 |
| Fibres non traitées (% volume) | 2 | 2 | 2 | 2 | 2 | 0 | 0 |
| Fibres traitées (% volume) | 0 | 0 | 0 | 0 | 0 | 2 | 2 |
| Mûrissement ou traitement thermique (°C) | 20 | 20 | 90 | 90 | 90 | 90 | 90 |
| Ténacité G (J/m²) | 10 | 26 | 9 | 24 | 12 | 12 | 29 |
| Résistance à la flexion (MPa) | 18,5 | 25,1 | 14 | 25 | 19 | 26 | 34 |
| Résistance à la traction (MPa) | 7,7 | 11,1 | | | | | |

N.B. : Dans le tableau I, les quantités des constituants de la composition sont exprimées en partie en poids, la quantité de ciment étant prise comme référence et égale à une partie en poids, à l'exception des fibres, qui, lorsqu'elles sont présentes, sont indiquées en pourcentage du volume total de la composition. $D_{50} = 75\ \mu m$ et $D_{75}=350\ \mu m$

La comparaison des exemples 1 et 2 (échantillons sans wollastonite) avec les exemples 3 et 4 (échantillon avec 17% de wollastonite aciculaire) montre que la ténacité double quasiment pour un béton ne contenant pas de fibres métalliques. On obtient des résultats semblables en comparant l'exemple 5 (échantillon sans wollastonite) avec l'exemple 6 (échantillon avec 10% de wollastonite aciculaire) toujours pour un béton sans fibres. Cette amélioration de ténacité (ajout de wollastonite) dépend de la qualité et de la nature du ciment.

La ténacité du béton avec fibres métalliques sans wollastonite est de 10J/m2, (exemple 9) et passe à 27 J/m2 lorsque l'on incorpore 10% de wollastonite (exemple 10).

L'énergie de fracturation globale résulte d'un effet cumulatif d'énergie consommée par la matrice (ténacité $G_C$) et d'énergie dissipée par les fibres métalliques.

On constate que la présence d'éléments renforts aciculaires, notamment de wollastonite, dans une matrice cimentaire particulièrement peu poreuse amplifie la transmission des efforts entre les fibres et le béton, permettant ainsi, grâce à un effet de synergie, de tirer un parti optimal des fibres, qui sont présentes en faibles quantités par rapport au béton, et ainsi d'améliorer la ductilité du matériau.

Cette combinaison de la porosité de la matrice cimentaire, d'éléments renforts aciculaires ou plaquettaires et de fibres métalliques présentes en faibles quantités par rapport au béton, constitue une caractéristique importante et originale de la présente invention.

Les éléments renforts anisotropes exercent ainsi un rôle important pour le contrôle de la microfessuration et le transfert de charges entre matrice et fibres métalliques. On constate également une amélioration des caractéristiques mécaniques du matériau en flexion, traction et compression.

L'utilisation d'éléments renforts plaquettaires type mica (exemple 7) fournit également une nette amélioration de la ténacité.

L'utilisation d'éléments renforts type wollastonite broyée (exemple 8) agit positivement sur la ténacité de la matrice mais dans une moindre mesure que la wollastonite aciculaire.

L'introduction d'un élément renfort aciculaire conduit à un gain significatif de la ténacité ; ce gain est plus faible lorsque le facteur d'acicularité (ou taille) est diminué.

Des observations semblables peuvent être faites pour les autres caractéristiques mécaniques. Ainsi, l'utilisation de wollastonite aciculaire améliore nettement la résistance à la flexion : voir la comparaison entre les exemples 11 (pas de wollastonite aciculaire) et 12 (avec wollastonite aciculaire). Il en est de même pour les renforts type mica : comparer les exemples 13 (sans mica) et 14 (avec mica).

En général, le traitement thermique à 90°C exerce un effet favorable sur la résistance à la flexion, qui est alors améliorée.

Cependant, même avec un mûrissement à 20°C, la résistance à la flexion est augmentée par l'introduction de wollastonite aciculaire (exemple 12 comparé à l'exemple 11, ce dernier étant réalisé avec une composition sans wollastonite).

Egalement, l'addition de wollastonite aciculaire améliore sensiblement les résistances à la traction avec mûrissement à 20°C comme avec traitement thermique à 90°C : à ce titre, on peut comparer les exemples 11 et 15 sans wollastonite aciculaire (témoin) et les exemples 12 et 17 avec 10% de wollastonite aciculaire.

On note en moyenne une amélioration de + 25% de la résistance intrinsèque à la traction directe du béton fibré, grâce à l'ajout de wollastonite.

Dans tous les exemples, on obtient des résistances à la compression supérieures à 150 MPa pour des compositions de béton présentant des valeurs E/C inférieures à 0,27.

Par ailleurs, l'introduction de wollastonite aciculaire améliore la régularité des caractéristiques mécaniques des bétons.

Cette propriété avantageuse est illustrée par les graphiques de la figure 1 qui représentent, comme indiqué précédemment, des essais de flexion effectués sur trois éprouvettes de compositions de bétons avec fibres (E/C = 0,24, mûrissement à 20°C) identiques en tous points, sauf pour la présence ou l'absence d'élément renfort type wollastonite aciculaire. Les compositions sans wollastonite, conformes à l'exemple 11, fournissent des courbes (courbes (11.1,11.2, 11.3) largement décalées, ce qui correspond à une forte dispersion des résultats en flexion. Par contre, avec les compositions contenant de la wollastonite, à savoir 10% de wollastonite aciculaire, conformes à l'exemple 12, les trois courbes (courbes 12.1, 12.2 et 12.3) obtenues sont très resserrées et se confondent presque, ce qui signifie une élimination quasi-totale de la dispersion des caractéristiques mécaniques du matériau.

Les mêmes observations s'appliquent aux graphiques de la figure 2 concernant des éprouvettes de bétons sans wollastonite conformes à l'exemple 9, (courbes 9.1, 9.2, 9.3) et avec wollastonite conformes à l'exemple 10, (courbes 10.1, 10.2, 10.3), les bétons testés étant des bétons avec fibres avec une valeur E/C = 0,24 et traitement thermique à 90°C.

L'exemple 17 conceme un béton comprenant à la fois de la wollastonite aciculaire et des fibres traitées. On constate que les meilleures performances en ténacité et en résistance à la flexion sont obtenues pour ce béton. Il est ainsi meilleur que le béton de l'exemple 10 qui ne comprend que la wollastonite aciculaire - et des fibres non traitées- et meilleur que le béton de l'exemple 16 qui ne comprend que des fibres traitées et pas de wollastonite aciculaire.

La combinaison fibres adhérentes/matrice à haute ténacité conduit bien à des performances améliorées.

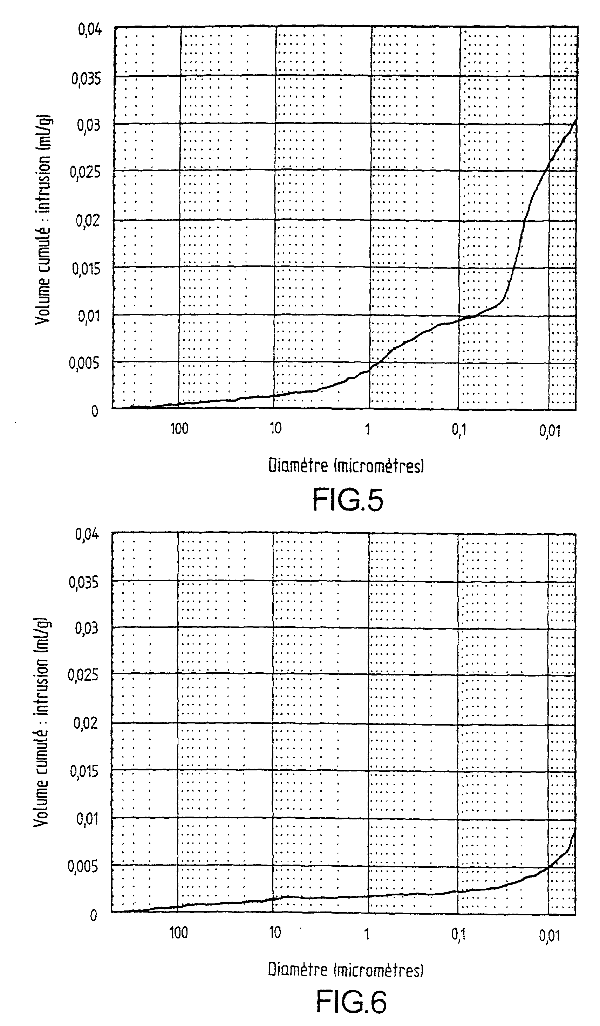

Il apparaît clairement sur les courbes des figures 5 (exemple 1), 6 (exemple 2) et 7 (exemple 3) que, dans le cas des échantillons en béton sans wollastonite, une faible porosité n'est atteinte que si les bétons sont soumis à un traitement thermique. Par contre, l'addition d'éléments renforts type wollastonite à la composition de ces bétons conduit de façon surprenante à une faible porosité y compris dans le cas de bétons soumis à un mûrissement à 20°C.

L'addition de wollastonite permet ainsi d'obtenir une bonne densification du béton (porosité réduite) et ce, même pour des conditions normales de mûrissement à 20°C.

### EXEMPLES 18 - 23 : influence de la nature des fibres

Les exemples 15 et 16 précédents illustrent déjà l'influence de l'amélioration du traitement des fibres. Ainsi, la figure 4 montre l'amélioration de l'adhérence fibres/matrice obtenue par un traitement de surface (phosphatation) des fibres (courbes 16.1, 16.2) vis-à-vis des fibres non traitées (courbe 15.1), les fibres étant incorporées dans une matrice telle que définie dans le Tableau I aux exemples 15 (fibres non traitées) et 16 (fibres traitées).

Exemple 18 - Tiges traitées ou non traitées

Cet exemple concerne des essais d'adhérence de tiges réalisés par la méthode générale indiquée plus haut - si ce n'est que les fils d'acier sont remplacés par des tiges d'acier de diamètre d = 5 mm.

Ces tiges sont introduites dans des échantillons de bétons sans fibres.

La composition du béton en parties en poids est la suivante :

| Ciment Portland HTS | 1 |
|---|---|
| Silice vitreuse MST | 0,325 |
| Farine de Quartz C400 | 0,300 |
| Sable BE31 | 1,43 |
| Dispersant (extrait sec) | 0,02 |
| Eau | 0,25 |

Les essais d'adhérence ont été réalisés sur des tiges, l'une en acier non traité et l'autre en acier traité par phosphatation au manganèse selon le protocole général ci-dessus mentionné si ce n'est qu'il s'agit de tiges et non de fils d'acier.

Avec la tige non traitée, la contrainte d'adhérence moyenne mesurée est de 10 MPa alors qu'avec la tige phosphatée, elle est de 15 MPa.

Exemple 19 - Fils d'acier traités ou non traités

Cet exemple concerne des essais d'adhérence de fils d'acier - et non des tiges - réalisés par la méthode générale indiquée plus haut. Les fils sont introduits dans des échantillons de bétons sans fibres présentant la même composition que celui de l'exemple 18.

Les essais d'adhérence ont été réalisés sur des fils, l'un en acier non traité et l'autre en acier traité par phosphatation au zinc selon le protocole général ci-dessus mentionné.

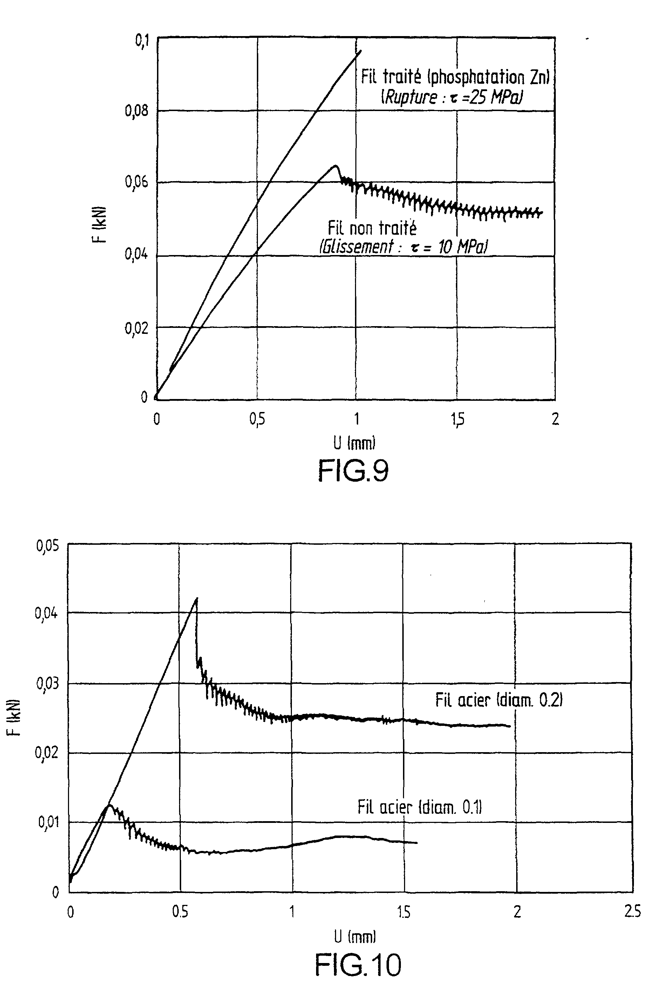

Les résultats sont rassemblés sur la figure 9. Il apparaît clairement sur cet exemple que le traitement de surface réalisé (phosphatation) conduit à un niveau d'adhérence très élevé : la contrainte de cisaillement passe de 10MPa (fil standard) à 25MPa (fil traité).

Exemple 20 - Utilisation de la silice de précipitation pour augmenter l'adhérence

Cet exemple est destiné à illustrer l'amélioration de l'adhérence fibres/matrice obtenue en modifiant la composition de la matrice cimentaire de l'exemple 18 par incorporation d'une silice de précipitation, ladite matrice étant utilisée dans un béton avec fibres métalliques non traitées, avec une valeur E/C de 0,2 et un traitement thermique 24h/24h à 90°C.

Les résultats sont représentés à la figure 3 qui est un graphique reproduisant les courbes obtenues dans un essai de traction sur éprouvette 7X7X28 cm pour un échantillon de béton avec 2 % en volume de fibres d'acier non traité, dont la matrice a été ou non modifiée par addition d'une quantité de suspension de silice RHOXIMAT CS 60 SL de RHODIA CHIMIE égale à 1,9 % en équivalent en poids sec par rapport au ciment (soit 0,65 % en poids par rapport au béton).

A la figure 3, les ordonnées représentent la contrainte à la rupture exprimée en MPa et les abscisses le déplacement traverse exprimé en mm. Les courbes (20.1, 20.2, 20.3) donnent les résultats pour trois éprouvettes avec silice et les courbes (20.4, 20.5) pour deux éprouvettes identiques sans silice. On voit que la dispersion des résultats est sensiblement réduite. En outre, l'énergie dissipée après la contrainte maximale est considérablement augmentée.

Exemple 21 - Influence du diamètre des fibres

Cet exemple est destiné à illustrer l'influence du diamètre des fibres sur l'adhérence fibre/matrice.
La composition de la matrice cimentaire est celle des exemples 18 et 19. On a introduit dans cette matrice des fils en acier de diamètres 100 et 200 μm ancrés dans la matrice sur une longueur de 5 mm.
Les résultats apparaissent sur la figure 10. Pour une longueur d'ancrage de 5 mm, l'adhérence est nettement plus élevée lorsque le diamètre du fil passe de 0,1 mm à 0,2 mm.

Exemple 22 - Influence de la longueur d'ancrage des fibres

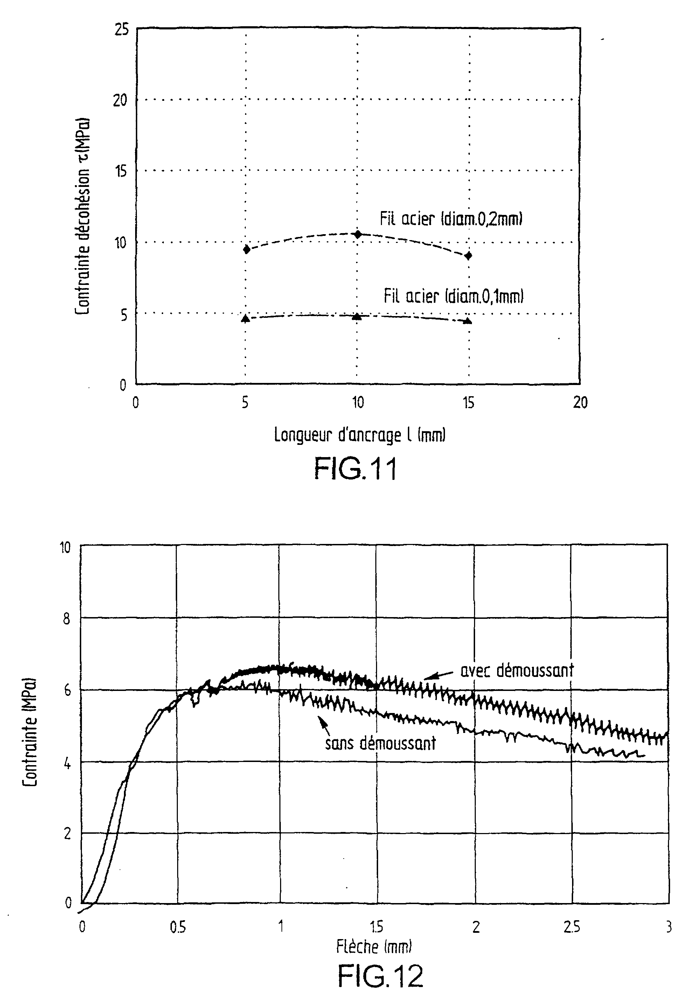

Cet exemple est destiné à illustrer l'influence de la longueur d'ancrage des fibres sur l'adhérence fibre/matrice.
La composition de la matrice cimentaire est celle des exemples 18 et 19. On a introduit dans cette matrice des fils en acier de diamètres 100 et 200 μm sur différentes longueurs d'ancrage.
Les résultats apparaissent sur la figure 11. Pour un fil de caractéristiques données, le niveau d'adhérence (contrainte de cohésion) est constant pour des longueurs d'ancrage allant de 5 à 15 mm.

Exemple 23 - Ajout d'un anti-mousse (ou démoussant)

Un moyen d'augmenter l'adhérence des fibres consiste également à ajouter un anti-mousse/démoussant à la composition de béton. Ainsi, l'exemple 16 a été repris en ajoutant 1% d'anti-mousse sous forme solide (poudre).
Les résultats apparaissent sur la figure 12. On observe un gain au niveau de la contrainte maxi (pic) et surtout une plus grande énergie de rupture due à une meilleure qualité d'interface fibres/matrice.

***EXEMPLES 25-29 : influence de la granulométrie des constituants du béton***

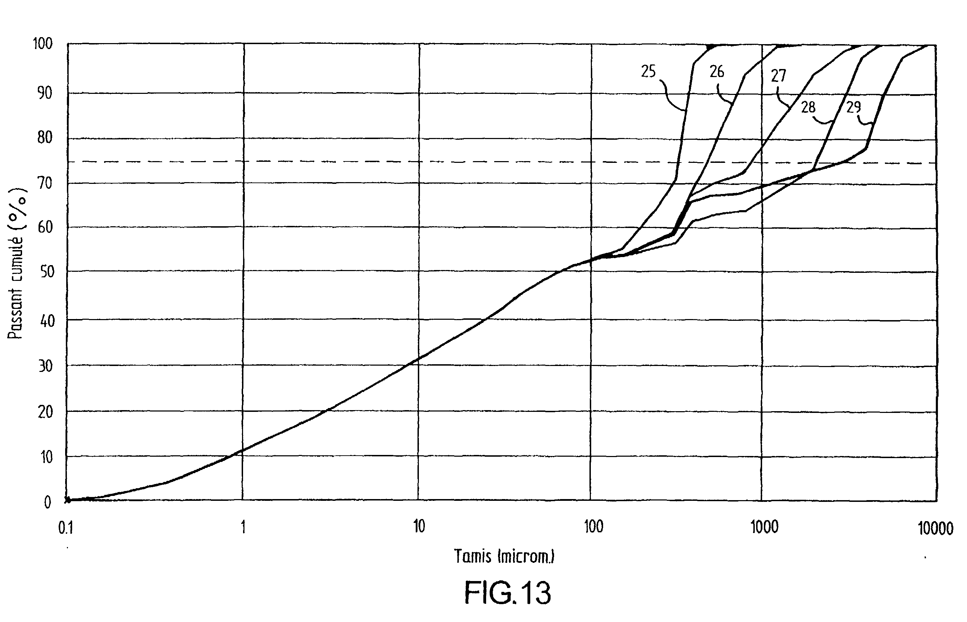

On a préparé 5 bétons selon l'invention à partir de constituants (a), (b), (c) et (d) présentant différentes répartitions granulométriques. Ces répartitions granulométriques sont représentées en figure 13.
On observe que pour ces 5 bétons, les constituants (a), (b), (c) et (d) vérifient la condition : la taille de grain D75 est toujours inférieure à 2 mm, et la taille de grain D50 est inférieure à 150 μm. Les répartitions granulométriques se différencient par la valeur de la taille de grain maximale D100 ou Dmax qui varie entre 600 μm et 6 mm.
Des bétons sont fabriqués à partir de ces 5 répartitions granulométriques. Leurs compositions sont rassemblées dans le tableau 2. La composition est exprimée en pourcentage en volume par rapport à l'ensemble de la composition.

Tableau 2

| Exemple | 25 | 26 | 27 | 28 | 29 |
|---|---|---|---|---|---|
| Dmax(mm) | 0,6 | 1 | 2,5 | 4 | 6 |
| Ciment HTS (a) | 23 | 23 | 23 | 22 | 23 |
| Silice MST (c) | 10 | 10 | 10 | 10 | 10 |
| Quartz C500 (b) | 7 | 7 | 7 | 7 | 7 |
| Sable BE31 (b)[*] | 37 | 14 | 13 | 8 | 11 |
| Sable NI 0,4/1,3 (b)[*] | 0 | 24 | 0 | 0 | 0 |
| Sable BB 0,5/2,5 (b)[*] | 0 | 0 | 25 | 10 | 7 |
| Sable BB 2/4 (b)[*] | 0 | 0 | 0 | 21 | 0 |

(*) SIFRACO

**18**

Tableau 2   (suite)

| Exemple | 25 | 26 | 27 | 28 | 29 |
|---|---|---|---|---|---|
| Sable SK 3/6 (b) (**) | 0 | 0 | 0 | 0 | 20 |
| Wollastonite NYADG (d) | 5 | 5 | 5 | 5 | 5 |
| Fibres BEKAERT | 2 | 2 | 2 | 2 | 2 |
| Dispersant OPTIMA 100 | 3 | 3 | 3 | 3 | 3 |
| Eau | 13 | 12 | 12 | 12 | 12 |

(**) SILICE et KAOLIN.

Les différentes granulométries sont obtenues en jouant sur la nature et la quantité des sables.

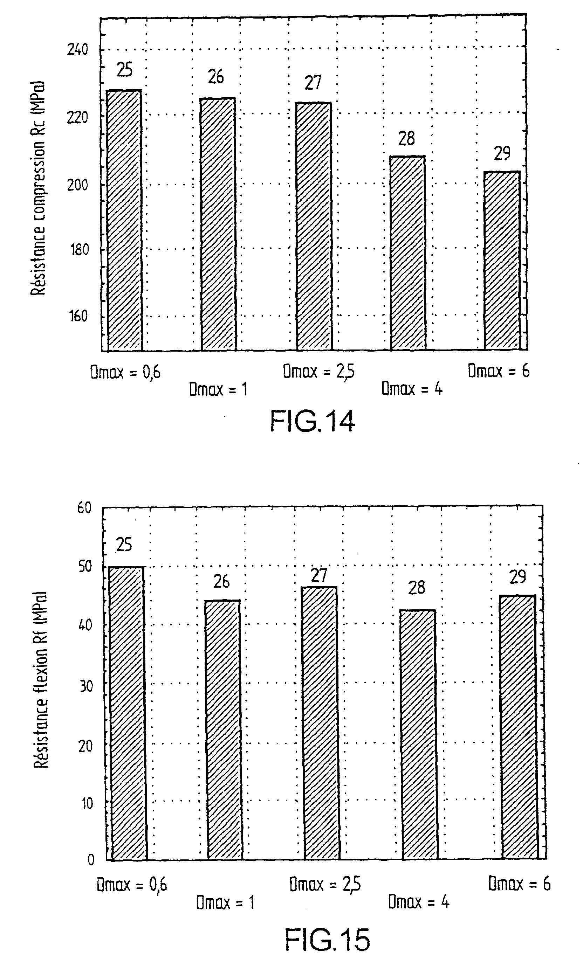

Les résistances en compression et les résistances en flexion 3 points pour 3 éprouvettes différentes de chaque béton 25 à 29 sont données sur les figures 14 et 15.

On observe que quelle que soit la répartition granulométrique et notamment la valeur du Dmax la résistance en compression reste supérieure à 150 MPa et la résistance en flexion reste supérieure à 30 MPa.

### EXEMPLES 30 - 33 Effet de synergie ténacité de la matrice / adhérence des fibres

Comme indiqué à l'exemple 17, il existe un effet de synergie entre la présence de fibres adhérentes liées à une matrice à haute ténacité.

Les exemples 30-33 mettent en valeur cette synergie. La formule de base de ces exemples est donnée dans le tableau 3 :

Dans l'exemple 30, les fibres sont des fibres d'acier, la wollastonite n'est pas présente.

Dans l'exemple 31, les fibres sont des fibres d'acier et la wollastonite est présente.

Dans l'exemple 32, les fibres sont des fibres d'acier traitées par phosphatation zinc, la wollastonite n'est pas présente.

Dans l'exemple 33, les fibres sont des fibres d'acier traitées par phosphatation zinc, la wollastonite est présente.

Les bétons sont soumis à une cure à 90°C.

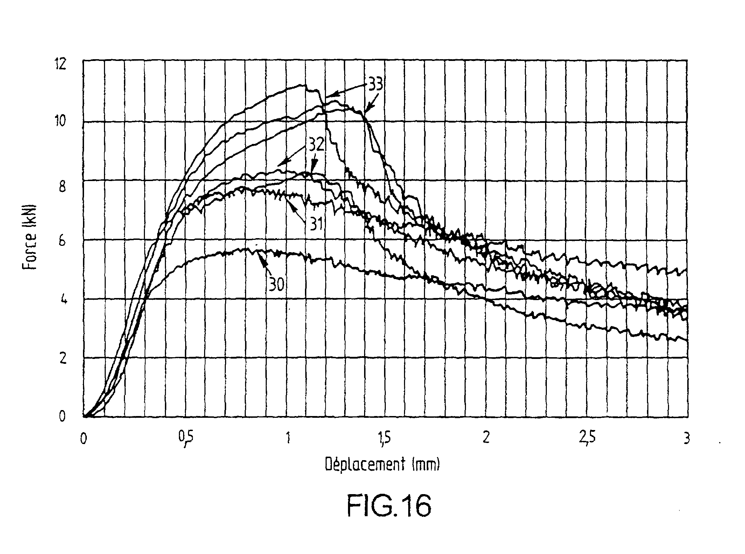

Les bétons des exemples 30 à 33 sont testés en flexion 3 points, les résultats apparaissent sur les courbes 30 à 33 de la figure 16 et les valeurs clés sont rassemblées dans le tableau 3 où les compositions sont exprimées en pourcentages poids par rapport au ciment.

Tableau 3

| Exemple N° | 30 | 31 | 32 | 33 |
|---|---|---|---|---|
| Ciment Portland (a) | 1 | 1 | 1 | 1 |
| Silice vitreuse (c) | 0,325 | 0,325 | 0,325 | 0,325 |
| Farine de quartz (b) | 0,3 | 0,3 | 0,3 | 0,3 |
| wollastonite aciculaire (d) | 0 | 0,24 | 0 | 0,24 |
| Sable (b) | 1,43 | 1,215 | 1,43 | 1,215 |
| Dispersant (extrait sec) | 0,018 | 0,018 | 0,018 | 0,018 |
| Eau (e/c) | 0,19 | 0,22 | 0,19 | 0,22 |
| Fibres non traitées (% volume) | 2 | 2 | 0 | 0 |
| Fibres traitées (% volume) | 0 | 0 | 2 | 2 |
| Traitement thermique (°C) | 90 | 90 | 90 | 90 |
| Limite élastique (MPa) | 16 | 28 | 29 | 36 |
| Contrainte au pic (MPa) | 25 | 35 | 37.5 | 50 |
| Flèche au pic (mm) | 0,8 | 0,8 | 1 | 1,2 |

Les meilleures propriétés mécaniques sont obtenues pour les fibres traitées et la matrice comprenant de la wollastonite de l'exemple 33. On note en outre un effet d'écrouissage important et un mécanisme d'endommagement par multifissuration (réseau de microfissures parallèles) et non pas de monofissuration.

**Revendications**

1. Béton constitué d'une matrice cimentaire durcie dans laquelle sont dispersées des fibres métalliques, provenant du mélange avec de l'eau d'une composition comprenant, outre les fibres :

   (a) du ciment ;
   (b) des éléments granulaires ayant une grosseur de grain maximale Dmax d'au plus 2 mm, de préférence d'au plus 1 mm ;
   (c) des éléments à réaction pouzzolanique ayant une taille de particules élémentaires d'au plus 1 µm, de préférence d'au plus 0,5 µm ;
   (d) des constituants capables d'améliorer la ténacité de la matrice choisis parmi deséléments aciculaires ou plaquettaires ayant une taille moyenne d'au plus 1 mm, et présents dans une proportion volumique comprise entre 2,5 et 35% du volume cumulé des éléments granulaires (b) et des éléments à réaction pouzzolanique (c);
   (e) au moins un agent dispersant

   et répondant aux conditions suivantes :

   (1) le pourcentage en poids de l'eau E par rapport au poids cumulé du ciment (a) et des éléments (c) est compris dans la gamme 8-24 %;
   (2) les fibres présentent une longueur individuelle l d'au moins 2 mm et un rapport l/ø, ø étant le diamètre des fibres, d'au moins 20 ;
   (3) le rapport R entre la longueur moyenne L des fibres et la grosseur de grain maximale Dmax des éléments granulaires est d'au moins 10 ;
   (4) la quantité de fibres est telle que leur volume est inférieur à 4% et de préférence à 3,5% du volume du béton après la prise.

2. Béton constitué d'une matrice cimentaire durcie dans laquelle sont dispersées des fibres métalliques, provenant du mélange avec de l'eau d'une composition comprenant, outre les fibres

   (a) du ciment ;
   (b) des éléments granulaires ;
   (c) des éléments à réaction pouzzolanique ayant une taille de particules élémentaires d'au plus 1 µm, de préférence d'au plus 0,5 µm ;
   (d) des constituants capables d'améliorer la ténacité de la matrice choisis parmi des éléments aciculaires ou plaquettaires ayant une taille moyenne d'au plus 1 mm, et présents dans une proportion volumique comprise entre 2,5 et 35% du volume cumulé des éléments granulaires (b) et des éléments à réaction pouzzolanique (c);
   (e) au moins un agent dispersant ;

   et répondant aux conditions suivantes:

   (1) le pourcentage en poids de l'eau E par rapport au poids cumulé du ciment (a) et des éléments (c) est compris dans la gamme 8-24%;
   (2) les fibres présentent une longueur individuelle l d'au moins 2 mm et un rapport l/ø, ø étant le diamètre des fibres, d'au moins 20 ;
   (3bis) le rapport R entre la longueur moyenne L des fibres et la taille de grain D75 de l'ensemble des constituants (a), (b), (c) et (d) est d'au moins 5, de préférence d'au moins 10 ;
   (4) la quantité de fibres est telle que leur volume est inférieur à 4% et de préférence à 3,5% du volume du béton après la prise ;
   (5) l'ensemble des constituants (a), (b), (c) et (d) présente une taille de grain D75 d'au plus 2 mm, de préférence, d'au plus 1 mm, et une taille de grain D50 d'au plus 200 µm, de préférence d'au plus 150 µm.

3. Béton selon la revendication 1 ou 2, **caractérisé en ce que** la ténacité de la matrice cimentaire est d'au moins 15 J/m2, avantageusement d'au moins 20 J/m2.

**4.** Béton selon l'une des revendications précédentes, **caractérisé en ce que** les éléments (d) ont une taille moyenne d'au plus 500 μm.

**5.** Béton selon l'une quelconque des revendications précédentes, **caractérisé en ce que** les éléments (d) sont présents dans une proportion volumique comprise dans la gamme 5%-25% du volume cumulé des éléments granulaires (b) et des éléments à réaction pouzzolanique (c).

**6.** Béton selon l'une quelconque des revendications précédentes, **caractérisé en ce que** les éléments (d) - ou éléments renforts - de forme aciculaire sont choisis parmi les fibres de wollastonite, les fibres de bauxite, les fibres de mullite, les fibres de titanate de potassium, les fibres de carbure de silicium, les fibres de cellulose ou dérivés de cellulose, les fibres de carbone, les fibres de phosphate de calcium, notamment d'hydroxyapatite HAP, les fibres de carbonate de calcium ou les produits dérivés obtenus par broyage desdites fibres et les mélanges desdites fibres.

**7.** Béton selon la revendication 6, **caractérisé en ce que** les éléments (d) sont des fibres de wollastonite.

**8.** Béton selon l'une quelconque des revendications précédentes, **caractérisé en ce que** les éléments (d) aciculaires présentent un rapport longueur/diamètre d'au minimum 3 et de préférence d'au minimum 5.

**9.** Béton selon l'une quelconque des revendications 1 à 5, **caractérisé en ce que** les éléments (d) - ou éléments renforts - plaquettaires sont choisis parmi les plaquettes de mica, les plaquettes de talc, les plaquettes de silicates mixtes (argiles), les plaquettes de vermiculite, les plaquettes d'alumine et aluminates ou silicates mixtes et les mélanges desdites plaquettes.

**10.** Béton selon la revendication 9, **caractérisé en ce que** les éléments (d) sont des plaquettes de mica.

**11.** Béton selon l'une quelconque des revendications précédentes, **caractérisé en ce qu'**au moins une partie des éléments renforts (d) présente en surface un revêtement organique polymérique comprenant un latex ou obtenu à partir d'au moins un des composés suivants: alcool polyvinylique, silanes, siliconates, résines siloxanes, polyorganosiloxanes ou le produit de la réaction entre (i) au moins un acide carboxylique contenant 3 à 22 atomes de carbone, (ii) au moins une amine aromatique ou aliphatique polyfonctionnelle ou amine substituée, contenant de 2 à 25 atomes de carbone, et (iii) un agent de réticulation qui est un complexe de métal hydrosoluble, contenant au moins un métal choisi parmi : le zinc, l'aluminium, le titane, le cuivre, le chrome, le fer, le zirconium et le plomb.

**12.** Béton selon l'une quelconque des revendications précédentes, **caractérisé en ce que** la contrainte d'adhérence moyenne des fibres métalliques dans la matrice cimentaire durcie est d'au moins 10 MPa, de préférence d'au moins 15 MPa.

**13.** Béton selon l'une quelconque des revendications précédentes, **caractérisé en ce que** les fibres métalliques sont des fibres d'acier.

**14.** Béton selon l'une quelconque des revendications précédentes, **caractérisé en ce qu'**elles présentent une géométrie variable.

**15.** Béton selon l'une quelconque des revendications précédentes, **caractérisé en ce que** les fibres métalliques sont des fibres ayant subi une attaque chimique ayant pour effet d'augmenter l'adhérence de la fibre dans la matrice cimentaire.

**16.** Béton selon l'une quelconque des revendications 1 à 14, **caractérisé en ce que** les fibres métalliques sont des fibres comportant un dépôt d'un composé minéral, tel que la silice ou d'un phosphate métallique ayant pour effet d'augmenter l'adhérence de la fibre dans la matrice cimentaire.

**17.** Béton selon l'une des revendications précédentes, **caractérisé en ce que** les fibres métalliques ont une longueur comprise dans la gamme 10-30mm.

**18.** Béton selon l'une quelconque des revendications précédentes, **caractérisé en ce que** la matrice cimentaire contient complémentairement au moins un des composés suivants, ayant pour fonction d'augmenter l'adhérence des fibres dans la matrice: les composés de la silice comprenant majoritairement de la silice, le carbonate de calcium précipité, l'alcool polyvinylique en solution aqueuse, un latex ou un mélange desdits composés.

19. Béton selon la revendication 18, **caractérisé en ce que** le composé de la silice est de la silice de précipitation introduite dans une teneur comprise entre 0,1% et 5% en poids, exprimé en sec, par rapport au poids total du béton.

20. Béton selon la revendication 19, **caractérisé en ce que** la silice de précipitation est introduite dans la composition sous forme d'une suspension aqueuse.

21. Béton selon la revendication 20, **caractérisé en ce que** la suspension aqueuse présente:

   - une teneur en matière sèche comprise entre 10 et 40% en poids ;
   - une viscosité inférieure à $4.10^{-2}$Pa.s pour un cisaillement de 50 $s^{-1}$ ;
   - une quantité de silice contenue dans le surnageant de ladite suspension à 7.500 trs/min pendant 30 min de plus de 50% du poids de la silice contenue dans la suspension.

22. Béton selon l'une quelconque des revendications précédentes, **caractérisé en ce que** le rapport l/ des fibres est d'au plus 200.

23. Béton selon l'une quelconque des revendications précédentes, **caractérisé en ce que** la taille de grain maximale Dmax des éléments granulaires (b) est d'au plus 6 mm.

24. Béton selon l'une quelconque des revendications précédentes, **caractérisé en ce que** les éléments granulaires (b) sont des sables ou des mélanges de sables, tamisés ou broyés, pouvant avantageusement comprendre des sables siliceux, en particulier de la farine de quartz.

25. Béton selon l'une des revendications précédentes **caractérisé en ce que** lesdits éléments granulaires (b) sont présents à raison de 20 à 60%, de préférence de 25 à 50% en poids de la matrice cimentaire.

26. Béton selon l'une quelconque des revendications précédentes, **caractérisé en ce que** les éléments à réaction pouzzolanique (c) comprennent des éléments choisis parmi les composés de silice, notamment les fumées de silice, les cendres volantes, les laitiers de hauts-fourneaux.

27. Béton selon l'une quelconque des revendications précédentes, **caractérisé en ce que** le pourcentage en poids de l'eau E par rapport au poids cumulé du ciment (a) et des éléments à réaction pouzzolanique (c) est compris dans la gamme 13-20%.

28. Béton selon l'une quelconque des revendications précédentes, **caractérisé en ce qu'**il est précontraint en pré-tension.

29. Béton selon l'une quelconque des revendications 1 à 27, **caractérisé en ce qu'**il est précontraint en post-tension.

30. Béton selon l'une quelconque des revendications précédentes, **caractérisé en ce qu'**il présente une résistance en traction directe d'au moins 12 MPa.

31. Béton selon l'une quelconque des revendications précédentes, **caractérisé en ce qu'**il présente une résistance en flexion 4 points (module de rupture) d'au moins 25 MPa.

32. Béton selon l'une quelconque des revendications précédentes, **caractérisé en ce qu'**il présente une résistance à la compression d'au moins 150 MPa.

33. Béton selon l'une quelconque des revendications précédentes, **caractérisé en ce qu'**il présente une énergie de fracturation d'au moins 2500 J/m2.

34. Béton selon l'une quelconque des revendications précédentes, **caractérisé en ce qu'**il est soumis, après prise, à une maturation à une température voisine de la température ambiante, par exemple de 20°C, pendant la durée nécessaire à l'obtention des caractéristiques mécaniques désirées.

35. Béton selon l'une quelconque des revendications 1 à 33, **caractérisé en ce qu'**il est soumis, après prise, à un traitement thermique entre 60°C et 100°C à pression normale.

36. Béton selon la revendication 35, **caractérisé en ce que** la durée du traitement thermique est de 6 heures à 4 jours, en général de 6 h à 72 h.

37. Matrice cimentaire comportant les constituants du béton définis dans l'une des revendications 1 à 3b à l'exception des fibres.

38. Prémélanges comprenant tout ou partie des constituants nécessaires à la préparation de la matrice selon la revendication 37 ou du béton selon l'une des revendications 1 à 36.


**Patentansprüche**

1. Beton, der aus einer gehärteten, zementartigen Matrix gebildet ist, in der Metallfasern dispergiert sind, der der Mischung einer Zusammensetzung mit Wasser entstammt, die außer den Fasern das folgende aufweist:

   (a) Zement;
   (b) körnige Elemente mit einer maximalen Korngröße Dmax von höchstens 2 mm, bevorzugt von höchstens 1 mm;
   (c) Elemente mit einer puzzolanischen Wirkung mit einer Größe der Grundpartikel von höchstens 1 $\mu$m, bevorzugt höchstens 0,5 $\mu$m;
   (d) Bestandteile, die imstande sind, die Zähigkeit der Matrix zu verbessern, ausgewählt unter nadel- oder plättchenförmigen Elementen mit einer mittleren Größe von höchstens 1 mm, die in einem Volumenanteil vorliegen, der zwischen 2,5 und 35% des summierten Volumens der körnigen Elemente (b) und der Elemente mit puzzolanischer Wirkung (c) liegt;
   (e) mindestens ein dispergierendes Mittel,

   und der den folgenden Bedingungen entspricht:

   (1) der Gewichts-Prozentsatz des Wassers E, bezogen auf das summierte Gewicht des Zements (a) und der Elemente (c), liegt im Bereich von 8 - 24 %;
   (2) die Fasern weisen eine individuelle Länge 1 von mindestens 2 mm und ein Verhältnis VØ von mindestens 20 auf, wobei Ø der Durchmesser der Fasern ist;
   (3) das Verhältnis R zwischen der mittleren Längs L der Fasern und der maximalen Korngröße Dmax der körnigen Elemente beträgt mindestens 10; und
   (4) die Menge an Fasern ist so, daß ihr Volumen kleiner ist als 4 % und bevorzugt als 3,5 % des Volumens des Betons nach dem Abbinden.

2. Beton, der aus einer gehärteten, zementartigen Matrix gebildet ist, in der Metallfasern dispergiert sind, der der Mischung einer Zusammensetzung mit Wasser entstammt, die außer den Fasern das folgende aufweist:

   (a) Zement;
   (b) körnige Elemente;
   (c) Elemente mit puzzolanischer Wirkung, die eine Grundpartikelgröße von höchstens 1$\mu$m, bevorzugt höchstens 0,5 $\mu$m aufweisen;
   (d) Bestandteile, die imstande sind, die Zähigkeit der Matrix zu verbessern, ausgewählt unter nadel- oder plättchenförmigen Elementen, mit einer mittleren Größe von höchstens 1 mm, die in einem Volumenanteil vorliegen, der zwischen 2,5 und 35 % des summierten Volumens der körnigen Elemente (b) und der Elemente mit puzzolanischer Wirkung (c) liegt;
   (e) mindestens ein dispergierendes Mittel,

   und der den folgenden Bedingungen entspricht:

   (1) der Gewichts-Prozentsatz des Wassers E, bezogen auf das summierte Gewicht des Zements (a) und der Elemente (c), liegt im Bereich von 8 - 24 %;
   (2) die Fasern weisen eine individuelle Länge 1 von mindestens 2 mm und ein Verhältnis VØ von mindestens 20 auf, wobei Ø der Durchmesser der Fasern ist;

(3a) das Verhältnis R zwischen der mittleren Länge L der Fasern und der Korngröße D75 der Gruppe von Bestandteilen (a), (b), (c) und (d) beträgt mindestens 5 und bevorzugt mindestens 10;

(4) die Menge an Fasern ist so, daß ihr Volumen kleiner ist als 4 % und bevorzugt als 3,5 % des Volumens des Betons nach dem Abbinden; und

(5) die Gruppe von Bestandteilen (a), (b), (c) und (d) weist eine Korngröße von D75 von höchstens 2 mm und bevorzugt von höchstens 1 mm und eine Korngröße D50 von höchstens 200 μm und bevorzugt von höchstens 150 μm auf.

3. Beton nach Ansprach 1 oder 2, **dadurch gekennzeichnet, daß** die Zähigkeit der zementartigen Matrix mindestens 15 J/m$^2$ und vorteilhafterweise mindestens 20 J/m$^2$ beträgt.

4. Beton nach einem der vorangehenden Ansprüche, **dadurch gekennzeichnet, daß** die Elemente (d) eine mittlere Größe von höchstens 500 μm haben.

5. Beton nach irgendeinem der vorangehenden Ansprüche, **dadurch gekennzeichnet, daß** die Elemente (d) in einem Volumenanteil vorliegen, der im Bereich von 5 % bis 25 % des summierten Volumens der gekörnten Elemente (b) und der Elemente mit puzzolanischer Wirkung (c) liegt.

6. Beton nach irgendeinem der vorangehenden Ansprüche, **dadurch gekennzeichnet, daß** die Elemente (d) - oder Verstärkungselemente - mit nadelartiger Form unter den Wollastonitfasern, den Bauxitfasern, den Mullitfasern, den Kaliumtitanatfasern, den Siliciumkarbidfasern, den Zellulosefasern oder Fasern aus Zellulosederivaten, den Kohlenstoff-Fasern, den Kalziumphosphatfasern, insbesondere Hydroxyapatit HAP, den Kalziumkarbonatfasern oder den abgeleiteten Produkten, die durch Mahlen der genannten Fasern und die Mischungen der genannten Fasern erhalten werden, ausgewählt sind.

7. Beton nach Anspruch 6, **dadurch gekennzeichnet, daß** die Elemente (d) Wollastonitfasern sind.

8. Beton nach irgendeinem der vorangehenden Ansprüche, **dadurch gekennzeichnet, daß** die nadelförmigen Elemente (d) ein Verhältnis Länge/Durchmesser von mindestens 3 und bevorzugt mindestens 5 aufweisen.

9. Beton nach einem der Ansprüche 1 bis 5, **dadurch gekennzeichnet, daß** die plättchenförmigen Elemente (d) - oder Verstärkungselemente - unter den Glimmerplättchen, den Talkplättchen, den Plättchen aus gemischten Silikaten (Tonsorten), den Vermiculitplättchen, den gemischten Plättchen aus Aluminium und Aluminaten oder Silikaten und den Mischungen der genannten Plättchen gewählt sind.

10. Beton nach Anspruch 9, **dadurch gekennzeichnet, daß** die Elemente (d) Glimmerplättchen sind.

11. Beton nach irgendeinem der vorangehenden Ansprüche, **dadurch gekennzeichnet, daß** mindestens ein Teil der Verstärkungselemente (d) in der Oberfäche einen organischen Polymerüberzug darbietet, der einen Latex aufweist oder aus mindestens einer der folgenden Zusammensetzungen erhalten ist: Polyvinylalkohohl, Silane, Silikonate, Siloxanharze, Polyorganosiloxane oder das Reaktonsprodukt zwischen (i) mindestens einer Carboxylsäure, die 3 bis 22 Kohlenstoffatome enthält, (ii) mindestens einem polyfunktionellen, aromatischen oder aliphatischen Amin oder substituierten Amin, das 2 bis 25 Kohlenstoffatome enthält, und (iii) einem Vernetzungsmittel, das ein Komplex aus wasserlöslichem Metall ist und mindestens ein Metall enthält, das ausgewählt ist unter: Zink, Aluminium, Titan, Kupfer, Chrom, Eisen, Zirkonium und Blei.

12. Beton nach irgendeinem der vorangehenden Ansprüche, **dadurch gekennzeichnet, daß** die mittlere Verbundfestigkeit der Metallfasern in der zementartigen, gehärteten Matrix mindestens 10 MPa und bevorzugt mindestens 15 MPa beträgt.

13. Beton nach irgendeinem der vorangehenden Ansprüche, **dadurch gekennzeichnet, daß** die Metallfasern Stahlfasern sind.

14. Beton nach irgendeinem der vorangehenden Ansprüche, **dadurch gekennzeichnet, daß** sie eine variable Geometrie aufweisen.

15. Beton nach irgendeinem der vorangehenden Ansprüche, **dadurch gekennzeichnet, daß** die Metallfasern Fasern sind, die einem chemischen Angriff unterzogen wurden, der bewirkt, die Haftung der Faser in der zementartigen Matrix zu erhöhen.

**16.** Beton nach irgendeinem der Ansprüche 1 bis 14, **dadurch gekennzeichnet, daß** die Metallfasern Fasern sind, die eine Ablagerung aus einer Mineralzusammensetzung aufweisen, wie Kieselerde oder ein metallisches Phosphat, was zur Wirkung hat, die Haftung der Faser in der zementartigen Matrix zu erhöhen.

**17.** Beton nach einem der vorangehenden Ansprüche, **dadurch gekennzeichnet, daß** die Metallfasern eine Länge aufweisen, die im Bereich von 10 bis 30 mm liegt.

**18.** Beton nach irgendeinem der vorangehenden Ansprüche, **dadurch gekennzeichnet, daß** die zementartige Matrix komplementär mindestens eine der folgenden Zusammensetzungen enthält, die zur Funktion hat, die Haftung der Fasern in der Matrix zu erhöhen: die Zusammensetzungen der Kieselsäure, die überwiegend Kieselsäure enthalten, ausgefälltes Kalziumkarbonat, Polyvinylalkohol in wässriger Lösung, einen Latex oder eine Mischung der genannten Zusammensetzungen.

**19.** Beton nach Anspruch 18, **dadurch gekennzeichnet, daß** die Zusammensetzung der Kieselsäure Kieselsäure aus einer Ausfällung ist, die mit einem Gehalt eingebracht wurde, der zwischen 0,1 Gew.-% und 0,5 Gew.-% liegt, in trockenem Zustand ausgedrückt und bezogen auf das Gesamtgewicht des Betons.

**20.** Beton nach Anspruch 19, **dadurch gekennzeichnet, daß** die Kieselsäure der Ausfällung in die Zusammensetzung in Form einer wässrigen Suspension eingebracht ist.

**21.** Beton nach Ansspruch 20, **dadurch gekennzeichnet, daß** die wässrige Lösung die folgenden Merkmale aufweist:

- einen Gehalt an Trockenmaterial, der zwischen 10 und 40 Gew.-% liegt;
- eine Viskosität von weniger als $4.10^{-2}$ Pa.s für eine Scherung von 50 $s^{-1}$; und
- eine Kieselsäuremenge, die im Überstand der genannten Suspension bei 7500 U/min während 30 min enthalten ist, von mehr als 50 % des Gewichts der Kieselsäure, die in der Suspension enthalten ist.

**22.** Beton nach irgendeinem der vorangehenden Ansprüche, **dadurch gekennzeichnet, daß** das Verhältnis I/ der Fasern höchstens 200 beträgt.

**23.** Beton nach irgendeinem der vorangehenden Ansprüche, **dadurch gekennzeichnet, daß** die maximale Korngröße Dmax der körnigen Elemente (b) höchstens 6 mm ist.

**24.** Beton nach irgendeinem der vorangehenden Ansprüche, **dadurch gekennzeichnet, daß** die körnigen Elemente (b) Sande oder Mischungen aus Sanden, gesiebt oder gemahlen, sind, die vorteilhafterweise Siliziumsande, insbesondere Quarzmehl, aufweisen können.

**25.** Beton nach einem der vorangehenden Ansprüche, **dadurch gekennzeichnet, daß** die genannten, körnigen Elemente (b) als Anteil von 20 bis 60 Gew.-%, bevorzugt von 25 bis 50 Gew.-%, der zementartigen Matrix vorliegen.

**26.** Beton nach irgendeinem der vorangehenden Ansprüche, **dadurch gekennzeichnet, daß** die Elemente mit puzzolanischer Wirkung (c) Elemente umfassen, die unter den Kieselsäurezusammensetzungen gewählt sind, vorzugsweise Silicastaub, Flugaschen und Hochofenschlacken.

**27.** Beton nach irgendeinem der vorangehenden Ansprüche, **dadurch gekennzeichnet, daß** der Gewichtsprozentsatz des Wassers E, bezogen auf das summierte Gewicht des Zements (a) und der Elemente mit puzzolanischer Wirkung (c) im Bereich von 13 bis 20 % liegt.

**28.** Beton nach irgendeinem der vorangehenden Ansprüche, **dadurch gekennzeichnet, daß** er unter Spannung vorbelastet ist.

**29.** Beton nach irgendeinem der Ansprüche 1 - 27, **dadurch gekennzeichnet, daß** er unter nachträglicher Vorspannung vorbelastet ist.

**30.** Beton nach irgendeinem der vorangehenden Ansprüche, **dadurch gekennzeichnet, daß** er eine Beständigkeit gegenüber unmittelbarem Zug von mindestens 12 MPa aufweist.

**31.** Beton nach irgendeinem der vorangehenden Ansprüche, **dadurch gekennzeichnet, daß** er eine 4-Punkt-Biegebeständigkeit (Bruchmodul) von mindestens 25 MPa aufweist.

**32.** Beton nach irgendeinem der vorangehenden Ansprüche, **dadurch gekennzeichnet, daß** er eine Druckfähigkeit von mindestens 150 MPa aufweist.

**33.** Beton nach irgendeinem der vorangehenden Ansprüche, **dadurch gekennzeichnet, daß** er eine Bruchenergie von mindestens 2500 J/m$^2$ aufweist.

**34.** Beton nach irgendeinem der vorangehenden Ansprüche, **dadurch gekennzeichnet, daß** er nach dem Abbinden einer Reifung bei einer Temperatur in der Nähe der Umgebungstemperatur, beispielsweise 20°C, während der Dauer unterzogen wird, die zum Erreichen der gewünschten mechanischen Eigenschaften erforderlich ist.

**35.** Beton nach irgendeinem der Ansprüche 1 bis 33, **dadurch gekennzeichnet, daß** er nach dem Abbinden einer Wärmebehandlung zwischen 60°C und 100°C bei Normaldruck unterzogen wird.

**36.** Beton nach Anspruch 35, **dadurch gekennzeichnet, daß** die Dauer der Wärmebehandlung 6 Stunden bis 4 Tage beträgt, im allgemeinen 6 Stunden bis 72 Stunden.

**37.** Zementartige Matrix, die die Bestandteile des Betons aufweist, die in einem der Ansprüche 1 bis 36 definiert sind, ausgenommen die Fasern.

**38.** Vormischungen, die alle oder einen Teil der Bestandteile enthalten, die zur Vorbereitung der Matrix nach Anspruch 37 oder des Betons nach einem der Ansprüche 1 bis 36 notwendig sind.


**Claims**

**1.** Concrete consisting of a hardened cementitious matrix in which metal fibres are dispersed, obtained by mixing, with water, a composition which comprises, apart from the fibres:

(a) cement;
(b) aggregate particles having a maximum particle size Dmax of at most 2 mm, preferably at most 1 mm;
(c) pozzolanic-reaction particles having an elementary particle size of at most 1 μm, preferably at most 0.5 μm;
(d) constituents capable of improving the toughness of the matrix, these being chosen from acicular or flaky particles having an average size of at most 1 mm and present in a proportion by volume of between 2.5 and 35% of the combined volume of the aggregate particles (b) and of the pozzolanic-reaction particles (c);
(e) at least one dispersing agent;

and satisfying the following conditions:

(1) the percentage by weight of water W with respect to the combined weight of the cement (a) and of the particles (c) is in the range 8 - 24%;
(2) the fibres have an individual length l of at least 2 mm and an l/d ratio of at least 20, d being the diameter of the fibres;
(3) the ratio R of the average length L of the fibres to the maximum particle size Dmax of the aggregate particles is at least 10;
(4) the amount of fibres is such that their volume is less than 4% and preferably less than 3.5% of the volume of the concrete after it has set.

**2.** Concrete consisting of a hardened cementitious matrix in which metal fibres are dispersed, obtained by mixing, with water, a composition which comprises, apart from the fibres:

(a) cement;
(b) aggregate particles;
(c) pozzolanic-reaction particles having an elementary particle size of at most 1 μm, preferably at most 0.5 μm;
(d) constituents capable of improving the toughness of the matrix, these being chosen from acicular or flaky particles having an average size of at most 1 mm and present in a proportion by volume of between 2.5 and 35% of the combined volume of the aggregate particles (b) and of the pozzolanic-reaction particles (c);

(e) at least one dispersing agent;

and satisfying the following conditions:

(1) the percentage by weight of water W with respect to the combined weight of the cement (a) and of the particles (c) is in the range 8 - 24%;

(2) the fibres have an individual length l of at least 2 mm and an l/d ratio of at least 20, d being the diameter of the fibres;

(3a) the ratio R of 0the average length L of the fibres to the D75 particle size of the combination of constituents (a), (b), (c) and (d) is at least 5, preferably at least 10;

(4) the amount of fibres is such that their volume is less than 4% and preferably less than 3.5% of the volume of the concrete after it has set;

(5) the combination of the constituents (a), (b), (c) and (d) has a D75 particle size of at most 2 mm, preferably at most 1 mm and a D50 particle size of at most 200 $\mu$m, preferably at most 150 $\mu$m.

3. Concrete according to Claim 1 or 2, **characterized in that** the toughness of the cementitious matrix is at least 15 J/m2, advantageously at least 20 J/m2.

4. Concrete according to one of the preceding claims, **characterized in that** the particles (d) have an average size of at most 500 $\mu$m.

5. Concrete according to any one of the preceding claims, **characterized in that** the particles (d) are present in a proportion by volume lying in the range 5% - 25% of the combined volume of the aggregate particles (b) and of the pozzolanic-reaction particles (c).

6. Concrete according to any one of the preceding claims, **characterized in that** the particles (d) - or reinforcing particles - of acicular shape are chosen from among wollastonite fibres, bauxite fibres, mullite fibres, potassium titanate fibres, silicon carbide fibres, cellulose or cellulose-derivative fibres, carbon fibres, calcium phosphate fibres, especially hydroxyapatite HAP fibres, calcium carbonate fibres or derived products obtained by grinding the said fibres and mixtures of the said fibres.

7. Concrete according to Claim 6, **characterized in that** the particles (d) are wollastonite fibres.

8. Concrete according to any one of the preceding claims, **characterized in that** the acicular particles (d) have a length/diameter ratio of at least 3 and preferably of at least 5.

9. Concrete according to any one of Claims 1 to 5, **characterized in that** the flaky particles (d) - or reinforcing particles - are chosen from among mica flakes, talc flakes, mixed silicate (clay) flakes, vermiculite flakes, alumina flakes and mixed aluminate or silicate flakes and mixtures of the said flakes.

10. Concrete according to Claim 9, **characterized in that** the particles (d) are mica flakes.

11. Concrete according to any one of the preceding claims, **characterized in that** at least some of the reinforcing particles (d) have, on their surface, a polymeric organic coating which comprises a latex or is obtained from at least one of the following compounds: polyvinyl alcohol, silanes, siliconates, siloxane resins, polyorganosiloxanes or the product from reaction between (i) at least one carboxylic acid containing from 3 to 22 carbon atoms, (ii) at least one polyfunctional aliphatic or aromatic amine or substituted amine, containing from 2 to 25 carbon atoms and (iii) a crosslinking agent which is a water-soluble metal complex containing at least one metal chosen from among: zinc, aluminium, titanium, copper, chromium, iron, zirconium and lead.

12. Concrete according to any one of the preceding claims, **characterized in that** the average bonding stress of the metal fibres in the hardened cementitious matrix is at least 10 MPa, preferably at least 15 MPa.

13. Concrete according to any one of the preceding claims, **characterized in that** the metal fibres are steel fibres.

14. Concrete according to any one of the preceding claims, **characterized in that** they have a variable geometry.

**15.** Concrete according to any one of the preceding claims, **characterized in that** the metal fibres are fibres which have been etched for the purpose of increasing the bonding of the fibre in the cementitious matrix.

**16.** Concrete according to any one of Claims 1 to 14, **characterized in that** the metal fibres are fibres on which has been deposited a mineral compound, such as silica or a metal phosphate, for the purpose of increasing the bonding of the fibre in the cementitious matrix.

**17.** Concrete according to one of the preceding claims, **characterized in that** the metal fibres have a length in the 10 - 30 mm range.

**18.** Concrete according to any one of the preceding claims, **characterized in that** the cementitious matrix additionally contains at least one of the following compounds, whose function is to increase the bonding of the fibres in the matrix: silica compounds comprising mostly silica, precipitated calcium carbonate, polyvinyl alcohol in aqueous solution, a latex or a mixture of the said compounds.

**19.** Concrete according to Claim 18, **characterized in that** the silica compound is a precipitated silica introduced with a content of between 0.1 and 5% by weight, expressed as dry matter, with respect to the total weight of the concrete.

**20.** Concrete according to Claim 19, **characterized in that** the precipitated silica is introduced into the composition in the form of an aqueous suspension.

**21.** Concrete according to Claim 20, **characterized in that** the aqueous suspension has:

- a solids content of between 10 and 40% by weight;
- a viscosity of less than $4\times10^{-2}$ Pa.s for a shear of 50 s$^{-1}$;
- an amount of silica contained in the supernatant liquid of the said suspension after centrifuging at 7500 rpm for 30 minutes of more than 50% of the weight of the silica contained in the suspension.

**22.** Concrete according to any one of the preceding claims, **characterized in that** the l/d ratio of the fibres is at most 200.

**23.** Concrete according to any one of the preceding claims, **characterized in that** the maximum particle size Dmax of the aggregate particles (b) is at most 6mm.

**24.** Concrete according to any one of the preceding claims, **characterized in that** the aggregate particles (b) are screened or ground sands or mixtures of sands, which advantageously may comprise silicious sands, particularly quartz flour.

**25.** Concrete according to one of the preceding claims, **characterized in that** the said aggregate particles (b) are present in an amount ranging from 20 to 60%, preferably from 25 to 50%, by weight of the cementitious matrix.

**26.** Concrete according to any one of the preceding claims, **characterized in that** the pozzolanic-reaction particles (c) comprise particles chosen from among silica compounds, especially silica fume, fly ash, or blast-furnace slag.

**27.** Concrete according to any one of the preceding claims, **characterized in that** the percentage by weight of water W with respect to the combined weight of the cement (a) and of the pozzolanic-reaction particles (c) is in the 13 - 20% range.

**28.** Concrete according to any one of the preceding claims, **characterized in that** it is pretensioned.

**29.** Concrete according to any one of Claims 1 to 27, **characterized in that** it is post-tensioned.

**30.** Concrete according to any one of the preceding claims, **characterized in that** it has a direct tensile strength of at least 12 MPa.

**31.** Concrete according to any one of the preceding claims, **characterized in that** it has a flexural strength in 4-point bending (modulus of rupture) of at least 25 MPa.

**32.** Concrete according to any one of the preceding claims, **characterized in that** it has a compressive strength of at least 150 MPa.

**33.** Concrete according to any one of the preceding claims, **characterized in that** it has a fracture energy of at least 2500 J/m2.

**34.** Concrete according to any one of the preceding claims, **characterized in that**, after it has set, it undergoes maturing at a temperature close to the ambient temperature, for example 20°C, for the time necessary to obtain the desired mechanical properties.

**35.** Concrete according to any one of Claims 1 to 33, **characterized in that**, after it has set, it undergoes a heat treatment between 60°C and 100°C at normal pressure.

**36.** Concrete according to Claim 35, **characterized in that** the duration of the heat treatment is from 6 hours to 4 days, generally from 6 h to 72 h.

**37.** Cementitious matrix containing the constituents of the concrete defined in one of claims 1 to 36, with the the exception of the fibres.

**38.** Premixes comprising all or some of the constituents necessary for preparing the matrix according to Claim 37 or the concrete according to one of Claims 1 to 36.

FIG.1

FIG.2

FIG.3

FIG.4

FIG.5

FIG.6

FIG.7

FIG.8

Fil traité (phosphatation Zn)
(Rupture : τ =25 MPa)

Fil non traité
(Glissement : τ = 10 MPa)

FIG.9

Fil acier (diam. 0.2)

Fil acier (diam. 0.1)

FIG.10

FIG.11

FIG.12

FIG.13

EP 1 034 148 B1

FIG.14

FIG.15

FIG.16